(19) Europäisches Patentamt
European Patent Office
Office européen des brevets

(11) **EP 1 532 583 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(51) Int Cl.:
*G06T 5/00* (2006.01)      *G06T 7/40* (2006.01)

(21) Anmeldenummer: 02762474.1

(22) Anmeldetag: **11.09.2002**

(86) Internationale Anmeldenummer:
**PCT/EP2002/010193**

(87) Internationale Veröffentlichungsnummer:
**WO 2004/021280 (11.03.2004 Gazette 2004/11)**

(54) **VERFAHREN ZUM EXTRAHIEREN VON TEXTURMERKMALEN AUS EINEM MEHRKANALIGEN BILD**

METHOD FOR EXTRACTING TEXTURE CHARACTERISTICS FROM A MULTICHANNEL IMAGE

PROCEDE D'EXTRACTION DE CARACTERISTIQUES DE TEXTURE A PARTIR D'UNE IMAGE MULTICANAL

(84) Benannte Vertragsstaaten:
**AT BE BG CH CY CZ DE DK EE ES FI FR GB GR IE IT LI LU MC NL PT SE SK TR**

(30) Priorität: **29.08.2002 DE 10239801**

(43) Veröffentlichungstag der Anmeldung:
**25.05.2005 Patentblatt 2005/21**

(73) Patentinhaber: **Fraunhofer-Gesellschaft zur Förderung der angewandten Forschung e.V. 80686 München (DE)**

(72) Erfinder:
- **KUZIELA, Heiko
  3724 Furtingen (CH)**
- **GROBE, Matthias
  90491 Nürnberg (DE)**
- **SPINNLER, Klaus
  91056 Erlangen (DE)**
- **MUENZENMAYER, Christian
  90409 Nürnberg (DE)**
- **WITTENBERG, Thomas
  91054 Erlangen (DE)**
- **SCHMIDT, Robert
  91058 Erlangen (DE)**

(74) Vertreter: **Schoppe, Fritz
Patentanwälte
Schoppe, Zimmermann, Stöckeler & Zinkler
Postfach 246
82043 Pullach bei München (DE)**

(56) Entgegenhaltungen:

- **ROSENFELD A . CHENG-YE WANG. WU A Y : "MULTISPECTRAL TEXTURE" IEEE TRANSACTIONS ON SYSTEMS, MAN AND CYBERNETICS, Bd. SMC-12, Nr. 1, 1982, Seiten 79-84, XP008029826 USA**
- **MARTINEZ-CABEZA-DE-VACA-ALAJARIN J ET AL: "Marble slabs quality classification system using texture recognition and neural networks methodology" 7TH EUROPEAN SYMPOSIUM ON ARTIFICIAL NEURAL NETWORKS. PROCEEDINGS OF ESANN'99, BRUGES, BELGIUM, 21-23 APRIL 1999, Seiten 75-80, XP002277169 1999, Brussels, Belgium, D-Facto, Belgium ISBN: 2-9600049-9-X**
- **PANJWANI D K ET AL: "MARKOV RANDOM FIELD MODELS FOR UNSUPERVISED SEGMENTATION OF TEXTURED COLOR IMAGES" IEEE TRANSACTIONS ON PATTERN ANALYSIS AND MACHINE INTELLIGENCE, IEEE INC. NEW YORK, US, Bd. 17, Nr. 10, 1. Oktober 1995 (1995-10-01), Seiten 939-954, XP000532200 ISSN: 0162-8828**
- **UNSER M: "SUM AND DIFFERENCE HISTOGRAMS FOR TEXTURE CLASSIFICATION" IEEE TRANSACTIONS ON PATTERN ANALYSIS AND MACHINE INTELLIGENCE, Bd. PAMI-8, Nr. 1, 1986, XP008029741**
- **CHEN Y Q ET AL: "Statistical geometrical features for texture classification" PATTERN RECOGNITION, PERGAMON PRESS INC. ELMSFORD, N.Y, US, Bd. 28, Nr. 4, 1. April 1995 (1995-04-01), Seiten 537-552, XP004013169 ISSN: 0031-3203**

**Beschreibung**

Die vorliegende Erfindung bezieht sich auf Verfahren zum Extrahieren von Texturmerkmalen aus einem mehrkanaligen Bild, und hier insbesondere auf ein Verfahren zum Extrahieren von Farbtexturmerkmalen zur automatischen Klassifikation und Segmentierung.

In der industriellen und in der medizinischen Bilderverarbeitung werden in jüngster Zeit vermehrt Farbkameras zur Erzeugung/Aufnahme der zu untersuchenden Bilder eingesetzt.

Typische medizinische Anwendungen solcher Farbkameras sind z.B. die Klassifikation und Segmentierung von Hautmelanomen, die Klassifikation dysplastischer und kanzeröser Zellen, z.B. von Zervix- oder Sputumzellen, in der Mikroskopie, oder die Unterscheidung von gesunden, dysplastischem oder krankem Gewebe oder Schleimhäuten in endoskopischen Untersuchungen von Mundhöhle, Kehlkopf, Larynx, Speiseröhre, Magen und Darm. Beispiele für einen industriellen Einsatz solcher Kameras sind die Klassifikation und Begutachtung von Holzstämmen anhand ihrer Rinde oder der Schnittfläche, die automatische Erkennung und Trennung von Müllsorten auf einem Förderband oder die Unterstützung bei der Kartographie durch Satellitenaufnahmen.

Solche mit Farbkameras gewonnenen Farbbilder können in den verschiedenen, genannten Anwendungsfeldern als Grundlage für eine Klassifikation sowie für eine Segmentierung der Bildinhalte dienen. Abhängig von dem Anwendungsfall und spezifischen Randbedingungen erfolgt entweder eine Betrachtung des gesamten Bildes oder lediglich eines oder mehrerer Bildausschnitte, der sogenannten Region Of Interest (ROI). Klassifikation bedeutet in diesem Zusammenhang die Zuordnung eines oder mehrerer im Bild dargestellter Objekte zu einer spezifischen Klasse. Segmentierung wird in diesem Zusammenhang dagegen als die Bestimmung solcher Objekte durch sinnvolle Zusammenfassung einzelner Bildpunkte zu größeren (Objekt)-Einheiten verstanden, also eine Klassifikation bzw. Zuordnung von Bildpunkten zu sogenannten Objektklassen.

Als Basis für eine solche Objekt- bzw. Pixelklassifikation dienen in der Regel sogenannte Merkmale, die sich aus Farb- bzw. den Grauwertintensitäten von Bildpunkten oder kleinen Gruppen von Bildpunkten berechnen lassen. Die Berechnung solcher Merkmale aus Grauwertbildern basiert dabei auf einer geschickten Zusammenfassung der Grauwerte der Bildpunkte des betrachteten Bildausschnittes. Beispiele solcher einfachen Merkmale sind z. B. Statistiken erster Ordnung, wie Häufigkeiten von Grauwerten (Histogramme), Mittelwerte und Varianzen der betrachteten Grauwerte in einem solchen Bildausschnitt. Komplexere Merkmale, mit denen sich beispielsweise auch sogenannten Texturen bzw. texturierte Oberflächen beschreiben und analysieren lassen, basieren dagegen z. B. auf Statistiken höherer Ordnung, sogenannten Fourier- oder Gabormerkmalen, Lauflängencodierungen, geometrisch-statistischen Merkmalen und ähnlichem. Beispiele für solche Statistiken höherer Ordnung zur Beschreibung von texturierten Oberflächen werden beispielsweise von R. M. Haralick, u.a. in "Texture Features for Image Classification", IEEE Transactions on Systems, Man, and Cybernetics, Vol. SMC-3, Nr. 6, Seiten 610-621, November 1973, von M. Unser in "Sum and Difference Histograms for Texture Analysis", IEEE Transactions on Pattern Analysis and Machine Intelligence, Vol. 8, Nr. 1 Seiten 118-125, 1986 und von Y. Q. Chen, u.a. in "Statistical Geometrical Features for Texture Classification", Pattern Recognition, Vol. 28, Nr. 4, Seiten 537-552, September 1995 beschrieben.

Der Nachteil dieser bekannten Ansätze besteht darin, dass diese auf die Auswertung von Intensitäten, die aus einer einkanaligen Aufnahme des Bildes gewonnen wurden, beschränkt sind, und somit lediglich die Bestimmung von Texturmerkmalen in solchen Bildern ermöglichen. Auf der Grundlage der so erfassten Texturmerkmale kann dann eine Klassifikation herkömmlicherweise durchgeführt werden.

Im Gegensatz zu Grauwertbildern wurde jedoch festgestellt, dass Farbbilder und insbesondere Informationen hinsichtlich der statistischen Verteilung der Farben ein sehr mächtiges und nützliches Klassifikationswerkzeug darstellen, so dass die Ausnutzung der Farbinformationen, die in einem Farbbild enthalten sind wünschenswert sind.

Im Stand der Technik sind verschiedene Ansätze bekannt, mittels denen die oben erwähnten Ansätze zur Extraktion von Texturmerkmalen aus Grauwertbildern auf mehrkanalige Bilder, z. B. Spektralbilder mit zwei oder mehr Ebenen, übertragen werden. Diese Ansätze arbeiten derart, dass die aus den Ansätzen betreffend die Untersuchung von Grauwert-Bildern bekannten Analyseschritte auf jeden der Kanäle des Bildes, also auf jede Bildebene, getrennt angewendet werden, und die sich ergebenden Texturmerkmale abschließend zu einem Gesamttexturmerkmal zusammengefasst werden.

Dieser Ansatz ist dahingehend nachteilhaft, dass dort jede Bildebene für sich allein betrachtet wird, so dass die in der tatsächlichen Verteilung der Farben eines Bildpunkts über die Ebenen enthaltenen Informationen zur Texturmerkmalsanalyse überhaupt nicht herangezogen werden, sondern lediglich durch eine abschließende Zusammenfassung der getrennt erzeugten Texturmerkmale eine Kombination der in allen Farbkanälen enthaltenen Bildpunktinformationen durchgeführt wird. Somit erfolgt hier keine wirkliche Verknüpfung der den einzelnen Bildpunkten in den unterschiedlichen Ebenen zugeordneten Informationen, so dass dieser Ansatz gegenüber dem herkömmlichen "Grauwert-Ansatz" nur geringfügige Verbesserungen mit sich bringt, die jedoch den erhöhten Rechenaufwand nicht rechtfertigen.

Ausgehend von diesem Stand der Technik liegt der vorliegenden Erfindung die Aufgabe zugrunde, ein verbessertes Verfahren zum Extrahieren von Texturmerkmalen aus einem mehrkanaligen Bild zu schaffen, welches die in jedem Kanal des Bildes enthaltenen Informationen eines Bildpunktes berücksichtigen.

Diese Aufgabe wird durch ein Verfahren nach Anspruch 1 gelöst.

Die vorliegende Erfindung schafft ein Verfahren zum Extrahieren von Texturmerkmalen aus einem mehrkanaligen Bild, das eine Mehrzahl von Bildpunkten umfasst, mit folgenden Schritten:

für jeden der Mehrzahl von Bildpunkten:

Verknüpfen von Bildpunktinformationen aus zumindest zwei Kanälen des Bildes; und

Bestimmen eines oder mehrerer Texturmerkmale aus den verknüpften Bildpunktinformationen des Bildes oder eines Bildfensters.

Die vorliegende Erfindung basiert somit auf Bildern, welche mit mehr als einem Spektralbereich aufgenommen wurden, z. B. auf Spektralbildern mit in der Regel drei Spektren (z.B. RGB), und lehrt einen Ansatz, der es ermöglicht aus den miteinander registrierten Spektralbildern Texturmerkmale zu extrahieren, welche für eine spätere Bildsegmentierung und Objektklassifikation herangezogen werden.

Das erfindungsgemäße Verfahren ist ausgelegt, um, gemäß einem bevorzugten Ausführungsbeispiel, basierend auf einer Aufnahme eines mehrkanaligen Bildes oder einer Bildfolge numerische Merkmale (Kennzahlen) des Gesamtbildes oder beliebig geformter Unterregionen zu berechnen. Die Bildfolge bzw. das Bild kann durch eine n-kanalige, n ≥ 2, Aufnahme erzeugt worden sein. Die Berechnung der numerischen Merkmale für jede der Regionen erfolgt unter Einbeziehung aller oder eines Teils der Kanäle des Bildes, wobei jeder der Kanäle Farbdaten bzw. Farbinformationen oder auch andere multispektrale Daten/Informationen beinhalten kann, wie z. B. Informationen betreffend IR-Strahlen, UV-Strahlen, Röntgenstrahlen. Die so erzeugten Merkmale können dann mit einem beliebigen Klassifikator (z. B. k-NN, Polynom und andere) zur Klassifikation bzw. Segmentierung des Bildes bzw. des Bildabschnitts herangezogen werden.

Gemäß einem bevorzugten Ausführungsbeispiel der vorliegenden Erfindung wird der Schritt des Verknüpfens wiederholt, bis für alle Kombinationen der unterschiedlichen Kanäle des Bildes verknüpfte Bildinformationen vorliegen. Auf der Grundlage der bestimmten Texturmerkmale wird ein Gesamttexturmerkmalsvektor für das mehrkanalige Bild oder den mehrkanaligen Bildausschnitt erzeugt, in dem die bestimmten einzelnen Texturmerkmale abgelegt sind.

Bei einem Ausführungsbeispiel, bei dem die Kanäle des Bildes Farbinformationen enthalten, können diese Kanäle Informationen bezüglich der Farbe des Bildes, der Luminanz und der Chrominanz des Bildes oder des Farbtons, der Sättigung und des Wertes des Bildes aufweisen.

Vorzugsweise umfasst der Schritt des Verknüpfens der Bildinformationen das Verknüpfen von Bildpunktinformationen von einem Bildpunkt eines ersten Kanals des Bildes und von einem Bildpunkt eines zweiten Kanals des Bildes, wobei der Bildpunkt des zweiten Kanals bezüglich des Bildpunkts des ersten Kanals versetzt sein kann.

Bei den Bildpunktinformationen handelt es sich vorzugsweise um Pixelintensitäten der zugeordneten Bildpunkte, also um die Intensitäten an den zugeordneten Pixeln in dem jeweiligen Kanal des Bildes.

Gemäß einem ersten bevorzugten Ausführungsbeispiel der vorliegenden Erfindung lassen sich in einem Bildausschnitt Summenhistogramme und/oder Differenzhistogramme der Pixelintensitäten aus mindestens zwei Kanälen erzeugen, wobei basierend auf den erzeugten Histogrammen Texturmerkmale erzeugt werden.

Gemäß einem zweiten bevorzugten Ausführungsbeispiel werden für das Verknüpfen eine oder mehrere Binärmasken pro Kanal erzeugt, indem die Pixelintensitäten bei zugeordneten Bildpunkten mit einem Schwellenwert verglichen werden. Vorzugsweise wird für jeden der Kanäle des Bildes eine Binärmaske erzeugt. Weiterhin vorzugsweise umfasst das der Erzeugen der Binärmaske das logische Verknüpfen der Pixelintensitäten aus zumindest zwei unterschiedlichen Kanälen.

Hinsichtlich der betrachteten Bilder oder Bildfenster (Bildausschnitte) wird darauf hingewiesen, dass diese betrachteten Bildausschnitte eine beliebige Form haben können. Insbesondere kann die Form des betrachteten Bildausschnitt an die Form des Objekts angepasst sein, für das Texturmerkmale zu bestimmen sind. Bei der Untersuchung von Zellkernen kann die Form des betrachteten Bildausschnitts derart gewählt sein, das lediglich der interessierende Zellkern umfasst ist.

Nachfolgend werden anhand der beiliegenden Zeichnungen bevorzugte Ausführungsbeispiele der vorliegenden Erfindung näher erläutert. Es zeigen:

Fig. 1    ein Blockdiagramm eines Klassifikations- und Segmentierungs-Verfahrens, welches den erfindungsgemäßen Textur-Algorithmus verwendet;

Fig. 2    einen betrachteten Bildausschnitt mit beliebiger Form oder ein betrachtetes Gesamtbild (Intensität), das der Bestimmung der Histogramme zugrunde liegt;

Fig. 3 eine Tabelle mit den Summen- und DifferenzHistogrammerkmalen nach Unser, die basierend auf dem in Fig. 2 gezeigten Bild und den darin enthaltenen Bildinformationen erzeugt werden;

Fig. 4 drei Ebenen eines Bildausschnitts oder eines Bildes, die durch eine Farbaufnahme erhalten werden, und die gemäß einem ersten Ausführungsbeispiel der vorliegenden Erfindung der Bestimmung der Histogramme zugrundegelegt werden;

Fig. 5 eine Tabelle in der für einige triviale Farbwerte die Umwandlung in L*u*v* zusammengefasst ist;

Fig. 6 die H-Ebene und die V-Ebene, in denen die Summen- und Differenzhistogramme gemäß einer alternativen Implementierung des ersten Ausführungsbeispiels berechnet werden;

Fig. 7 die Erzeugung eines Binärmaskenstapels aus einem Grauwertbild für die Erzeugung von statistischen geometrischen Graupegelmerkmalen;

Fig. 8 eine Tabelle mit typischen Werten für einen anfänglichen Schwellwert $\alpha_0$, der Stufengröße $\Delta\alpha$ und der Anzahl von Intensitäten sowie der Anzahl der damit erzeugbaren Binärbilder $G$;

Fig. 9 eine Tabelle der statistischen Merkmale nach Chen, die basierend auf den geometrischen Eigenschaften aus dem in Fig. 7 dargestellten Binärstapel abgeleitet werden;

Fig. 10 die Erzeugung kombinierter Binärstapel aus n=3 Ebenen eines Bildes, um statistische geometrische Inter-Ebenen-Merkmale gemäß einem zweiten Ausführungsbeispiel der vorliegenden Erfindung zu erzeugen;

Fig. 11 die Erzeugung kombinierter Binärstapel zur Berechnung statistischer geometrischer Merkmale aus einem HSV-Bild gemäß einer alternativen Implementierung des zweiten Ausführungsbeispiels, wobei die H'V-Darstellung erhalten wird, indem ein Farbton bezüglich der Sättigung einer Schwellwertoperation unterzogen wird;

Fig. 12 eine Tabelle eines BarkTex-Testsatz (BKV), wobei die Texturklassen sechs unterschiedliche Sorten von Bäumen sind, aus denen 68 Muster übernommen wurden;

Fig. 13 eine Tabelle eines Holztestsatzes, wobei defekte Klassen zusammen mit der Anzahl von Stellvertretern gezeigt sind;

Fig. 14 eine Tabelle mit den besten Ergebnissen der Klassifikation, die basierend auf der Inter-Ebenen-Merkmalsextraktion gemäß dem ersten Ausführungsbeispiel erhalten werden;

Fig. 15 eine Tabelle mit den besten Ergebnissen der Klassifikation, die basierend auf der Euklid-Distanz-Merkmalsextraktion gemäß dem ersten Ausführungsbeispiel erhalten werden;

Fig. 16 eine Tabelle mit den besten Ergebnissen der Klassifikation, die basierend auf der nicht-linearen H'V-Merkmalsextraktion gemäß dem ersten Ausführungsbeispiel erhalten werden unter Verwendung von Inter-Ebenen-Differenzen (oben) in der V-Ebene und trigonometrischen Differenzmaßen in der H-Ebene (unten);

Fig. 17 eine Tabelle mit den besten Ergebnissen der Klassifikation, die basierend auf der farberweiterten Merkmalsextraktion gemäß dem ersten Ausführungsbeispiel erhalten werden, wobei die Verbesserungsmaße $\Delta r$ relativ zu den besten Grauskalaraten sind;

Fig. 18 eine Tabelle mit den besten Ergebnissen der Klassifikation, die basierend auf der Inter-Ebenen-SGF-Merkmalsextraktion gemäß dem zweiten Ausführungsbeispiel, die auf den RGB-Farbraum angewendet werden, erhalten werden; und

Fig. 19 eine Tabelle mit den besten Ergebnissen der Klassifikation, die basierend auf der nicht-linearen H'V-SGF-Merkmalsextraktion gemäß dem zweiten Ausführungsbeispiel erhalten werden.

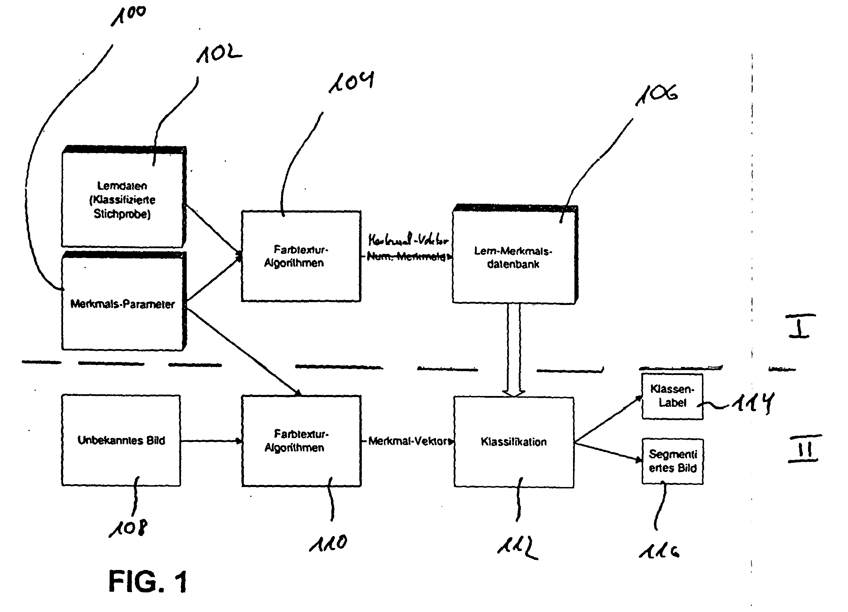

Fig. 1 zeigt ein Blockdiagramm eines Klassifikations- und Segmentierungs-Verfahrens, welches den erfindungsgemäßen Texturerkennungsalgorithmus verwendet. Wie in Fig. 1 zu erkennen ist, umfasst das Verfahren eine erste Stufe I, die Lernstufe, und eine zweite Stufe II, die Klassifikations- und Segmentierungs-Stufe. In der ersten Stufe I werden zunächst bekannte Merkmals-Parameter festgelegt (siehe Block 100). Bei diesen Merkmals-Parametern handelt es sich um Randbedingungen für die Texturmerkmalsberechnung. Im Block 102 werden Lerndaten erfasst, indem bekannte Bilder oder Bildausschnitte mit bekannten (klassifizierten) Texturen bereitgestellt werden, also bereits klassifizierte Stichproben. Das im Block 102 bereitgestellte, bereits klassifizierte Bild wird dem erfindungsgemäßen Farbtextur-Algorithmus im Block 104 zusammen mit den bekannten Merkmals-Parametern bereitgestellt, wodurch die numerischen Merkmale (Merkmalsvektor) für die in dem Bild 102 enthaltene, bekannte Textur erzeugt werden, die für diese Textur dann in der Lern-Merkmals-Datenbank 106 abgelegt werden.

In der zweiten Stufe II wird ein unbekanntes Bild oder ein Bildausschnitt 108 dem Verfahren zugeführt, und der erfindungsgemäße- Farbtexturalgorithmus wird im Block 110 auf das unbekannte Bild 108 angewandt, wobei der Farbtexturalgorithmus von der Datenbank 100 die existierenden Merkmals-Parameter erhält. Basierend auf der Untersuchung des unbekannten Bildes 108 mittels des erfindungsgemäßen Verfahrens und basierend auf den bereitgestellten Merkmals-Parametern wird ein Merkmalsvektor erzeugt, welche die verschiedenen, durch den Farbtextur-Algorithmus aufgefundenen Merkmale in dem unbekannten Bild 108 enthält. Dieser Merkmals-Vektor wird einer Klassifikation im Block 112 zugeführt, wo basierend auf Informationen von der Datenbank 106 die Klassifikation des Merkmals-Vektors durchführt wird, um so entweder eine Klassifikation 114 des gesamten Bildes 108 bzw. eine Segmentierung 116 durch Klassifikation einzelner Bildpunkte des Bildes oder des Bildausschnitts 108 durchzuführen.

Die in den Blöcken 104 und 110 erwähnten Farbtextur-Algorithmen basieren auf dem erfindungsgemäßen Verfahren, gemäß dem für ein mehrkanaliges Bild, wie beispielsweise ein Spektralbild, für jeden der Bildpunkte Bildpunktinformationen aus zumindest zwei Farbkanälen des Bildes verknüpft werden, um hieraus eines oder mehrere Texturmerkmale zu bestimmen. Diese Texturmerkmale werden dann zu dem Merkmals-Vektor zusammengefasst und der Klassifikation zugeführt.

Anhand der nachfolgenden Zeichnungen erfolgt nun eine Beschreibung bevorzugter Ausführungsbeispiele des erfindungsgemäßen Verfahrens, welches in den Algorithmen 104, 110 implementiert ist.

Erstes Ausführungsbeispiel

Nachfolgend wird zunächst ein erstes Ausführungsbeispiel der vorliegenden Erfindung näher beschrieben, bei dem der Klassifizierung Merkmale zugrundegelegt werden, die basierend auf Summenhistogrammen und/oder Differenzhistogrammen der Pixelintensitäten bei zugeordneten Bildpunkten in zumindest zwei Kanälen/von zumindest zwei Ebenen erhalten werden. Zunächst wird jedoch der bekannte Ansatz für Intensitätsbilder erläutert, der von M. Unser in "Sum and Difference Histograms for Texture Analysis", IEEE Transactions on Pattern Analysis and Machine Intelligence, Vol. 8, Nr. 1 Seiten 118-125, 1986 näher beschrieben wird.

Die oben bereits kurz erläuterten Statistiken höherer Ordnung verwenden zwei eindimensionale Histogramme (Summen- und Differenzhistogramm). Dabei handelt es sich um Histogramme, die die Häufigkeit von Summen und Differenzen der Pixelintensitäten $I(x_1, y_1)$ und $I(x_2, y_2)$ mit einer bestimmten Verschiebung $(d_x, d_y)$ zählen. Diese werden wie folgt definiert:

$$h_S(i) = |\{(x_1, y_1) \in D \,|\, I(x_1, y_1) + I(x_2, y_2) = i\}|$$

$$h_D(j) = |\{(x_1, y_1) \in D \,|\, I(x_1, y_1) - I(x_2, y_2) = j\}|$$

mit:

i =    0, ..., 2(G-1),
j =    -G+1, ..., G-1
G =    maximaler Intensitätspegel pro Bildkanal, z.B. 256 Intensitäten,
I =    Intensität,
$x_i\, y_i$ =    Koordinate eines betrachteten Punktes im Bild,
D =    Bildausschnitt,
$h_S$ =    Summenhistogramm, und
$h_D$ =    Differenzhistogramm.

Diese Zählwerte weisen die Anzahl von Pixelpaaren in einem Bildausschnitt D (ROI = Region Of Interest) auf, die eine Summe mit dem Wert i bzw. eine Differenz mit dem Wert j aufweisen. Beide Histogramme weisen 2G-1 Einträge (bins) auf, die den 511 Einträgen entsprechen, wenn Bilder mit G = 256 Intensitäten (z.B. Graupegeln) angenommen werden. Die Quantisierung auf N Einträge kann bezüglich der Histogramme auch durch Runden unter Verwendung der nachstehenden Gleichung durchgeführt werden:

$$d' = \left[ \frac{d(N-1)}{d_{max}} + 0.5 \right]$$

mit:

N = Gesamtzahl der Zählwerte, und
$d_{max}$ = maximaler Differenz- oder Summenwert.

Die Unabhängigkeit der Histogrammeinträge $h_S(i)$ und $h_D(j)$ wird durch Normierung mit der Gesamtanzahl von Zählwerten N des betrachteten Bildausschnitts erreicht:

$$N = \sum_{i=0}^{2(G-1)} h_S(i) = \sum_{j=-G+1}^{G-1} h_D(j)$$

$$\hat{P}_S(i) = \frac{h_S(i)}{N}, \quad i = 0, \ldots, 2(G-1)$$

$$\hat{P}_D(j) = \frac{h_D(j)}{N}, \quad j = -G+1, \ldots, G-1$$

mit:

$P_S$ = normiertes Summenhistogramm, und
$P_D$ = normiertes Differenzhistogramm.

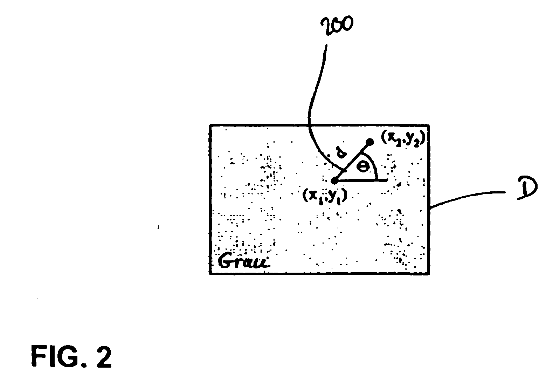

Der Verschiebungsvektor $(d_x, d_y)$ kann durch d = Radius und $\theta$ = Winkel (siehe Fig. 2) dargestellt werden. Fig. 2 zeigt einen betrachteten Bildausschnitt oder ein betrachtetes Gesamtbild (Grauwert) D, in dem die betrachteten Bildpunkte $x_1/y_1$, $x_2/y_2$ (Pixelpaar) sowie ein die Bildpunkte verbindender Vektor 200 gezeigt ist. Mit den Summen- und Differenzhistogrammen werden Statistiken zweiter Ordnung der verschobenen Pixelpaare (d, $\theta$) abgeschätzt. Im allgemeinen ist es ausreichend, für den Winkel $\theta$ Werte = 0, $\pi/4$, $\pi/2$,3 $\pi/4$ für einen bestimmten Radius d zu verwenden und die Merkmale für jedes der Histogramme separat zu berechnen. Um einen bestimmten Grad einer Rotationsinvarianz einzuführen, ist es möglich, Histogramme über allen vier Richtungen zu akkumulieren und dann die Merkmale zu berechnen.

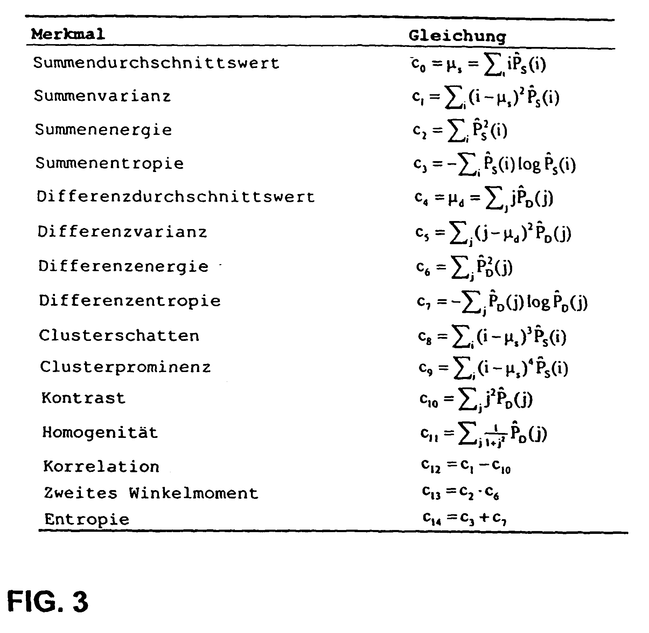

Basierend auf den oben beschriebenen Histogrammen werden 15 Merkmale bestimmt, die in der Tabelle in Fig. 3 gezeigt sind. Diese Merkmale beschreiben die Eigenschaften einer Textur unter Verwendung von z. B. Momenten und Entropiemaßen. Der Differenz-Mittelwert und die Varianz $(c_4, c_5)$ charakterisieren die durchschnittliche Intensitätsdifferenz zwischen Nachbarpixeln und wie gleichmäßig diese Differenz ist. Daher ist ein großer Wert von $c_4$ ein Hinweis für ein Bild mit einem hohen Kontrast und vielen Kanten. Analog dazu werden Mittelwert und Varianz auf das Summenhistogramm $(c_0, c_1)$ angewendet, jedoch ohne eine offensichtliche visuelle Interpretierung. Konzentrierte Spitzen in den Histogrammen werden durch die Energiemaße $(c_2, c_6)$ ausgewertet, die große Werte für homogene Bereiche in den Differenzhistogrammen mit einer Spitze bei d = 0 ergeben werden. Mit den Entropien $(c_3, c_7)$ und dem abgeleiteten Merkmal $(c_{14})$ werden informationstheoretische Maße verwendet, wodurch beurteilt wird, wie "deterministisch" das Erscheinungsbild einer Textur ist. Intuitiv deutlich ist das Kontrastmerkmal $(c_{10})$, das das Auftreten von hohen Intensitätsdifferenzen überproportional gewichtet. Diese Merkmale werden auch Basismerkmale genannt.

Gemäß dem ersten Ausführungsbeispiel der vorliegenden Erfindung werden die oben beschrieben Nachteile des gerade beschriebenen "Grauwert-Ansatzes" zur Klassifizierung, Summenhistogramme und/oder Differenzhistogramme zu verwenden, dadurch vermieden, dass dieser Ansatz auf die Betrachtung mehrerer Ebenen erweitert wird. Um auch statistische Abhängigkeiten zwischen den Ebenen abzudecken, werden die Texturmerkmale basierend auf den oben beschriebenen Merkmalen über verschieden Ebenen (Inter-Ebene) bestimmt. Dies wird nachfolgend auch als das Inter-Ebenen-Verfahren bezeichnet.

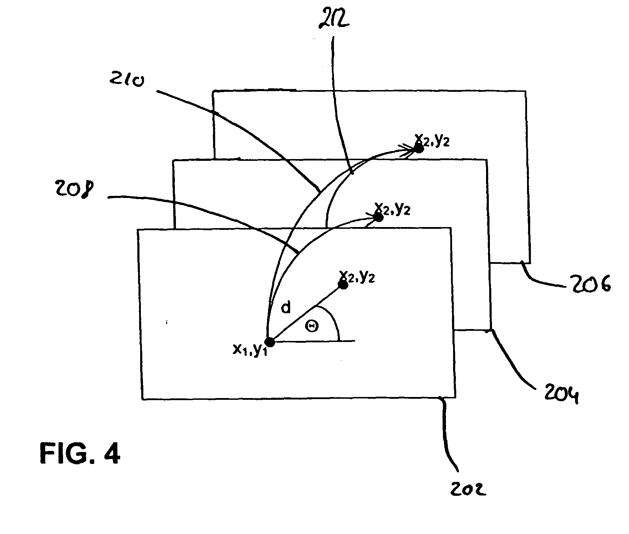

Anhand der Fig. 4 werden diese Spektral- und Ebenenerweiterten Summen- und Differenzhistogramme beschrieben. In Fig. 4 sind drei Ebenen 202, 204, 206 (z.B. R,G,B) gezeigt, die durch eine Farbaufnahme des Bildes oder des Bildausschnitts erhalten werden. In den einzelnen Ebenen 202, 204, 206 (auch als Kanäle bezeichnet) sind einzelne Pixel - ähnlich wie in Fig. 2 - gezeigt und durch deren x,y-Koordinate dargestellt. Durch die Pfeile 208, 210, 212 ist die ebenenübergreifende Verarbeitung angedeutet. Bei dem dargestellten Ausführungsbeispiel existiert eine Verknüpfung eines Bildpunktes $x_1/y_1$ in der ersten Ebene 202 mit einem Bildpunkt $x_2/y_2$ in der zweiten Ebene 204 (siehe Pfeil 208), der von dem Bildpunkt $x_1/y_1$ in der ersten Ebene 202 verschoben (d) sein kann, und mit einem Bildpunkt $x_2/y_2$ in der dritten Ebene 206 (siehe Pfeil 210), der von dem Bildpunkt $x_1/y_1$ in der ersten Ebene 202 verschoben (um den gleichen Betrag d) sein kann. Ferner existiert eine Verknüpfung eines Bildpunktes $x_1/y_1$ in der zweiten Ebene 204 mit einem dazu verschobenen Bildpunkt $x_2/y_2$ in der dritten Ebene 206 (siehe Pfeil 212). Die Verschiebung wird durch den Parameter d festgelegt.

Die Inter-Ebenen-Summen- und Differenzhistogramme werden wie folgt definiert:

$$h_S^{(pq)}(i) = |\{(x_1, y_1) \in D \,|\, I^{(p)}(x_1, y_1) + I^{(q)}(x_2, y_2) = i\}|$$

$$h_D^{(pq)}(j) = |\{(x_1, y_1) \in D \,|\, I^{(p)}(x_1, y_1) - I^{(q)}(x_2, y_2) = j\}|$$

mit:

p, q = Ebene, Kanal mit $p \neq q$,
i = 0, ..., 2(G-1),
j = -G+1, ..., G-1,
G = maximaler Farbwert
$I^{(p)}$ = Intensität eines Bildpunkts in der Ebene p an der Stelle $x_i/y_i$,
$I^{(q)}$ = Intensität eines Bildpunkts in der Ebene q an der Stelle $x_i/y_i$,
x,y = Koordinate eines betrachteten Punktes im Bild,
D = Bildausschnitt,
$h_S$ = erweitertes Summenhistogramm, und
$h_D$ = erweitertes Differenzhistogramm.

Aufgrund der Assoziativität der Summierung und Subtraktion sind bei dem Beispiel eines Dreikanalbildes (Kanäle 1, 2 und 3) nur drei Paare

- $h_S^{(12)}, h_D^{(12)}$
- $h_S^{(13)}, h_D^{(13)}$
- $h_S^{(23)}, h_D^{(23)}$

bei einer Aufnahme in drei Spektralkanälen notwendig. Für das Inter-Ebenen-Verfahren mit drei Ebenen ist der Merkmalsvektor dreimal länger als bei dem oben beschriebenen, ursprünglichen Ansatz. Es wird darauf hingewiesen, dass für Inter-Ebenen-Merkmale auch eine Verschiebung von d = 0 bei einer undefinierten Richtung θ gewählt sein kann. In diesem Fall wird die direkte Korrelation zwischen den Bildpunkten zwischen den Kanälen an jeder Pixelposition $x_1/y_1$ ausgedrückt. Die Verschiebung d und die Richtung θ sind für dieses Ausführungsbeispiel die oben erwähnten Randbedingungen (siehe Block 100 in Fig. 1).

Neben dem Erzeugen der Histogramme durch die oben beschrieben Möglichkeiten, was die primäre Möglichkeit zum Erweitern der Merkmale darstellt, können auch neue spezifische Farbmerkmale eingeführt werden. Aus der Tabelle in Fig. 3 ist zu entnehmen, dass die Merkmale $c_{12}$, $c_{13}$ und $c_{14}$ aus beiden Histogrammen (Summen- und Differenzhistogramm) abgeleitet werden. Anstatt nur den Basissatz von Merkmalen $\{c_i\}$ auf die Histogramme von jeder separaten Ebene anzuwenden, können nun neue Merkmale konstruiert werden. Diese sind durch Kombinieren von abgeleiteten Merkmalen aus Histogrammen von unterschiedlichen Ebenen definiert, die folgendes ergeben:

$$c_{12}^{(pq)} = c_1^{(p)} - c_{10}^{(q)}$$

$$c_{13}^{(pq)} = c_2^{(p)} \cdot c_6^{(q)}$$

$$c_{14}^{(pq)} = c_3^{(p)} + c_7^{(q)}$$

Nun stehen im Multispektralbild neue Merkmale zur Verfügung, die für jede Richtung θ berechnet werden können. Wenn keine Kumulation der Histogramme verwendet wird, führt dies zu 36 sogenannten Kreuz-Histogram-Merkmalen.

Eine zweite Gruppe von neuen Me kmale basiert auf der Kreuz-Korrelation zwischen den Histogrammen der unterschiedlichen Ebenen. Die Kreuzleistungs-Merkmale werden wie folgt definiert:

$$c_{PS}^{(pq)} = \sum_i \hat{P}_S^{(p)}(i)\hat{P}_S^{(q)}(i)$$

$$c_{PD}^{(pq)} = \sum_i \hat{P}_D^{(p)}(i)\hat{P}_D^{(q)}(i)$$

wenn gilt: $p \neq q$.

Genauer gesagt handelt es sich hier um sechs Merkmale für jede der vier Richtungen θ, wenn sie an ein RGB-Bild angelegt werden, was zu 24 Merkmalen insgesamt führt. Natürlich könnten mehr Merkmale definiert werden, und diese Merkmale können auf das Inter-Ebenen-Verfahren und die nachstehend beschriebenen Verfahren angewendet werden.

Ein weiteres Ausführungsbeispiel zum Einführen von Spektralinformationen bei der Merkmalsextraktion ist die Verwendung eines Distanzmaßes im Farbraum. Das L2-Maß (Euklid-Distanz) wird verwendet, um ein Skalarmaß aus den Spektralwerten eines Pixelpaars zu berechnen. Auf einem multispektralen Bild mit den Farbebenen $I^{(p)}$ wird die L2-Norm eines Farbvektors wie folgt definiert:

$$\| \vec{I}(x,y) \|_{L2} = \sqrt{\sum_p (I^{(p)}(x,y))^2}$$

Daher wird die Norm des Summenvektors in der Definition der Summenhistogramme verwendet mit:

$$s(x_1,y_1) = \| \vec{I}(x_1,y_1) + \vec{I}(x_2,y_2) \|_{L2}$$

$$h_S(i) = |\{(x_1,y_1) \in D \,|\, s(x_1,y_1) = i\}|$$

mit:

$$i = 0, ..., 2\,(G-1)\,\sqrt{3}$$

Aufgrund der unterschiedlichen Extremwerte der Norm eines Summen- bzw. eines Differenzvektors unterscheidet sich die Länge der Histogramme. Abgesehen davon, wird die Differenz nur positive Werte annehmen, wenn einfach die Norm des Differenzvektors, der als

$$\hat{d}(x_1, y_1) = \| \vec{I}(x_1, y_1) - \vec{I}(x_2, y_2) \|_{L2}$$

definiert ist, verwendet wird. Daher wird die Richtung des Differenzvektors durch Ändern des Vorzeichens verwendet, wenn die Mehrheit der Vektorelemente negativ ist. Unter Auslassung der Koordinatenindizierung kann dies im RGB-Raum als

$$d = \begin{cases} -\hat{d} & \text{wenn } d^{(p)} < 0 \text{ für zwei oder mehr } p \\ \hat{d} & \text{ansonsten} \end{cases}$$

formuliert werden, wenn $d^{(p)} = I^{(p)}(x_1, y_1) - I^{(p)}(x_2, y_2)$ die Skalarebenen-Differenzen sind. Daher können die Differenzhistogramme unter Verwendung der L2-Norm wie folgt definiert werden:

$$h_D(j) = |\{(x_1, y_1) \in D \,|\, d(x_1, y_1) = j\}|$$

wenn $j = -(G-1)\text{-}\sqrt{3}, ..., (G-1)\text{-}\sqrt{3}$ ist. Für ein Bild mit drei 8-Bit-Kanälen entspricht dies Histogrammen von 883 Einträgen. Da die L2-Norm in den meisten Fällen zu Bruchzahlen führt, werden diese einfach einem ganzzahligen Einträge (bin) durch Runden zugeordnet.

Durch Wahrnehmung erkennbar einheitliche Farbräume sind für ihre Eigenschaft bekannt, dass Entfernungen im Farbraum mit der menschlichen Wahrnehmung eng verwandt sind. Motiviert durch die Tatsache, dass die Euklid-Distanz im L\*u\*v\*-Raum der wahrnehmbaren Entfernung des Durchschnittsmenschen entspricht, wird dieses Entfernungsmaß auf die L\*u\*v\*-Darstellung für eine Merkmalsberechnung angewendet.

Der L\*u\*v\*-Raum wurde 1976 durch die CIE standardisiert und wird vom XYZ-Raum zusammen mit einem weißen Referenzpunkt $(X_n, Y_n, Z_n)$ abgeleitet, der der transformierte normalisierte RGB-Vektor (1, 1, 1) ist. Für die weitere Beschreibung sei die folgende Definition angenommen:

$$\begin{pmatrix} X \\ Y \\ Z \end{pmatrix} = \begin{pmatrix} 0,4125 & 0,3576 & 0,1804 \\ 0,2127 & 0,7152 & 0,0722 \\ 0,0193 & 0,1192 & 0,9502 \end{pmatrix} \begin{pmatrix} r \\ g \\ b \end{pmatrix}$$

Die Helligkeitskomponente L\* wird wie folgt angegeben:

$$L* = \begin{cases} 116\left(\frac{Y}{Y_n}\right)^{\frac{1}{3}} - 16 & \text{wenn } \frac{Y}{Y_n} > 0,008856 \\ 903,3\left(\frac{Y}{Y_n}\right) & \text{ansonsten} \end{cases}$$

Um die Chrominanzkomponenten u\* und v\* zu berechnen, sind einige Zwischengrößen notwendig. Wenn $u'_n$, $v'_n$ nur vom weißen Referenzpunkt abhängig sind, gilt:

$$u'_n = \frac{4X_n}{X_n + 15Y_n + 3Z_n}$$

$$v'_n = \frac{9X_n}{X_n + 15Y_n + 3Z_n}$$

$$u' = \frac{4X}{X + 15Y + 3Z}$$

$$v' = \frac{9X}{X + 15Y + 3Z}$$

$$u* = 13L*(u' - u'_n)$$

$$v* = 13L*(v' - v'_n)$$

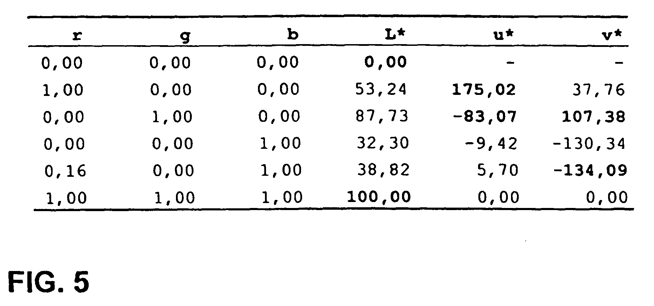

Der in hohem Maße nicht-lineare Charakter des L*u*v*-Raums kann durch Umwandeln der Farben von dem diskreten RGB-Würfel und durch Auftragen der Ergebnisse visualisiert werden. Für einige triviale Farbwerte ist die Umwandlung in L*u*v* in der Tabelle in Fig. 5 zusammengefasst. Die Werte in Fettdruck zeigen die minimalen bzw. maximalen Werte im L*u*v*-Raum. Die Farbe schwarz mit einer Null-Intensität in allen Kanälen ist eine Singularität, die zu undefinierten Komponenten u*, v* führt.

Bei diesen Extremwerten führt die Euklid-Farbdistanz zu den nachstehenden maximalen Werten der Distanz bzw. der Summe:

$$d_{uv,max} = \sqrt{\sum_l (I^{(l)}_{max}(x,y) - I^{(l)}_{min}(x,y))^2} = 367,32$$

$$s_{uv,max} = 2\sqrt{\sum_l (max\{|I^{(l)}_{max}(x,y)|, |I^{(l)}_{min}(x,y)|\})^2} = 484,21$$

mit $1 \in \{L^*, u^*, v^*\}$.

Daher ist das Summenhistogramm im Bereich [0; 485] und das Differenzhistogramm bei [-368; 368] durch Runden der Maxima auf die nächstgrößere Gesamtzahl gültig. Eine gemeinsame Länge von Summen- und Differenzhistogrammen wird bei der Implementierung durch Dehnen des Summenhistogramms auf [0; 736] erhalten.

Anstelle des in hohem Maße korrelierten und symmetrischen RGB-Farbraums kann auch das HSV-Farbmodell (HSV = hue, saturation, value = Farbton, Sättigung, Wert) bei der Texturklassifizierung verwendet werden.

Der Farbtonwert H ist ein Winkelmaß um die V-Achse in einem zylindrischen Koordinatensystem, wobei dieses Modell durch einen sechseckigen Konus dargestellt sein kann. Die Darstellung von rot, die bei einem Winkel von 0 beginnt, ist gemäß unterschiedlichen Definitionen in der Literatur mehr oder weniger willkürlich gewählt. Der Wert V misst die Helligkeit und S die Farbsättigung oder die Farbtonreinheit. Grauwerte, für die R = G = B gilt, sind Singularitäten in dem HSV-Raum und sind auf der V-Achse vorzufinden, wenn S = 0 und H undefiniert ist. Eine weitere Singularität ist V = 0, was reines Schwarz ist. Für die vorliegende Beschreibung wird eine Umwandlung unter Verwendung der normierten r, g, b $\in$ [0; 1] verwendet:

$$V = max\{r, g, b,\}$$

$$S = \begin{cases} 1 - \frac{\min\{r,g,b\}}{\max\{r,g,b\}} & \text{wenn } \max\{r,g,b\} > 0 \\ 0 & \text{ansonsten} \end{cases}$$

$$H = \begin{cases} \frac{g-b}{\max\{r,g,b\}-\min\{r,g,b\}} \cdot \frac{\pi}{3} & \text{wenn } \max\{r,g,b\} = r \\ \frac{b-r}{\max\{r,g,b\}-\min\{r,g,b\}} \cdot \frac{\pi}{3} + \frac{2\pi}{3} & \text{wenn } \max\{r,g,b\} = g \\ \frac{r-g}{\max\{r,g,b\}-\min\{r,g,b\}} \cdot \frac{\pi}{3} + \frac{4\pi}{3} & \text{wenn } \max\{r,g,b\} = b \end{cases}$$

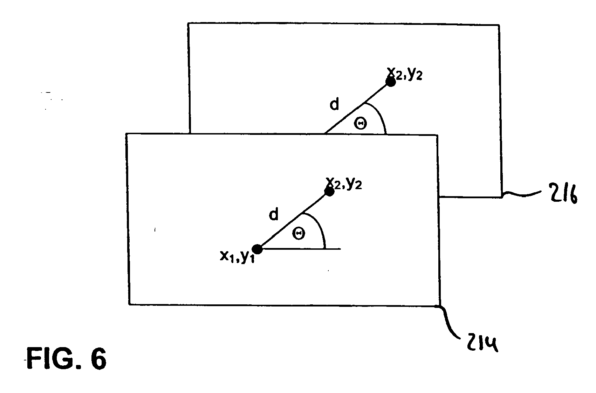

Fig. 6 zeigt die bei diesem Ansatz existierenden zwei Ebenen oder Kanäle 214 216, die H-Ebene und die V-Ebene mit den Bildpunkten $x_1/y_1$, $x_2/y_2$.

Für kleine Sättigungswerte reagiert der Farbton hochsensibel auf ein Sensorrauschen im Bild. Daher werden zur Texturklassifizierung die Informationen vom H-Kanal nur verwendet, wenn ein bestimmter Sättigungsschwellenwert $S_{min}$ überschritten wird. Ansonsten wird der Satz H auf einen willkürlichen, jedoch konstanten Wert gesetzt, z.B.

$$H' = \begin{cases} H & \text{wenn } S \geq S_{min} \\ 0 & \text{ansonsten} \end{cases}$$

Die Übertragung der Differenz- und Summenhistogramme auf den HSV-Raum kann schwierig sein, da der H-Kanal eine Winkeldarstellung ist. Die Farbtonwerte variieren zwischen 0 und $2\pi$, was der gleiche Farbton ist. Diese Schwierigkeit wird gelöst, wenn die vorherigen Definitionen für die Summen- und Differenzhistogramme verwendet werden. Daher wird ein Distanzmaß verwendet, das für $\Delta H = \pi$ maximal ist:

$$d = \sin\left(\frac{\Delta H}{2}\right) = \sin\left(\frac{H_1 - H_2}{2}\right)$$

Für die Summierung kann der Bereich von $[0; 2\pi]$ überschritten werden, jedoch wird ein Maß verwendet, das für $H_1 + H_2 \bmod 2\pi = \pi$ maximal ist. Es ist zu beachten, dass die Modulo-Operation bei der Berechnung des Sinus implizit ist:

$$s = \sin\left(\frac{H_1 + H_2 \quad \bmod 2\pi}{2}\right) = \sin\left(\frac{H_1 + H_2}{2}\right)$$

Um diskrete Histogramme zu erstellen, werden diese Definitionen auf den gleichen Bereich wie im Graupegelfall skaliert, der $[-255; 255]$ bzw. $[0; 510]$ beträgt:

$$s^{(H')}(x_1, y_1) = 510 \sin\left(\frac{I^{(H')}(x_1, y_1) + I^{(H')}(x_2, y_2)}{2}\right)$$

$$d^{(H')}(x_1, y_1) = 255 \sin\left(\frac{I^{(H')}(x_1, y_1) - I^{(H')}(x_2, y_2)}{2}\right)$$

Die Merkmale werden dann aus den Summen- und Differenzhistogrammen auf der H'- und V-Ebene wie folgt

definiert:

$$h_S^{(H')}(i) = |\{(x_1, y_1) \in D \,|\, s^{(H')}(x_1, y_1) = i\}|$$

$$h_D^{(H')}(i) = |\{(x_1, y_1) \in D \,|\, d^{(H')}(x_1, y_1) = i\}|$$

$$h_S^{(V)}(i) = |\{(x_1, y_1) \in D \,|\, I^{(V)}(x_1, y_1) + I^{(V)}(x_2, y_2) = i\}|$$

$$h_D^{(V)}(j) = |\{(x_1, y_1) \in D \,|\, I^{(V)}(x_1, y_1) - I^{(V)}(x_2, y_2) = j\}|$$

Zweites Ausführungsbeispiel

Nach folgend wird ein zweites Ausführungsbeispiel der vorliegenden Erfindung näher beschrieben, bei dem der Klassifizierung eine Binärmaske, die durch Vergleichen der Pixelintensitäten bei zugeordneten Bildpunkten in verschiedenen Ebenen mit einem Schwellenwert erhalten wird, zugrunde liegt. Zunächst wird wiederum ein bekannter Ansatz für Graupegelbilder erläutert.

Eine geometrische Klasse von Texturalgorithmen basiert auf dem sogenannten SGF-Lösungsansatz (SGF = Statistical Geometrical Feature = statistische geometrische Merkmale), der von Y. Q. Chen, u.a. in "Statistical Geometrical Features for Texture Classification", Pattern Recognition, Vol. 28, Nr. 4, Seiten 537-552, September 1995 näher beschrieben wird. Gemäß diesem Ansatz werden 16 statistische Merkmale basierend auf den geometrischen Eigenschaften von miteinander verbundenen Bildpunktbereichen in einer Serie von binären Bildern berechnet. Diese binären Bilder werden durch eine Schwellwertoperationen bezüglich des Intensitätsbildes erzeugt. Es werden geometrische Eigenschaften, wie die Anzahl von verbundenen Bereichen und ihre Unregelmäßigkeit zusammen mit ihren Statistiken (mittlere Abweichung, Standardabweichung), die den Stapel von binären Bildern beschreiben, verwendet.

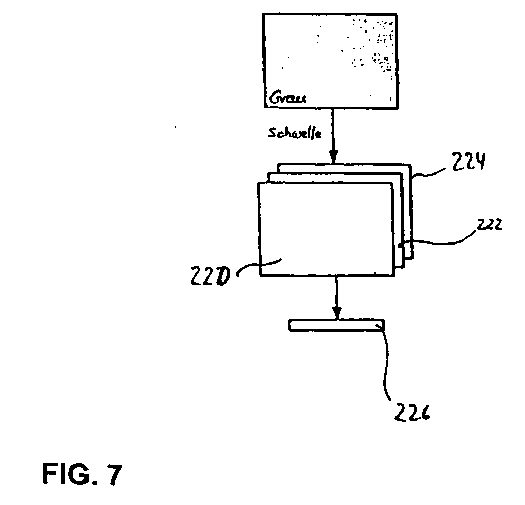

Fig. 7 zeigt ein Graupegelbild 218, aus dem durch die Schwellenoperation ein Binärstapel mit drei Binärmasken 220, 222, 224 erzeugt wird. Aus den Binärmasken 220, 222, 224 wird der Merkmalsvektor 226 für die nachfolgende Klassifikation bestimmt. Nach der Binarisierung mit unterschiedlichen Schwellenwerten werden statistische geometrische Merkmale aus dem binären Bildstapel berechnet.

Für ein Bild I(x, y) mit G Graupegeln kann ein binäres Bild $I_{B\alpha}$ (x, y) durch Schwellwertoperationen mit einem Schwellenwert $\alpha \in [1; G\text{-}1]$ erhalten werden, was zu

$$I_{B\alpha}(x, y) = \begin{cases} 1 & \text{wenn } I(x, y) \geq \alpha \\ 0 & \text{ansonsten} \end{cases}$$

führt.

Der Stapel aller möglichen G-1 binären Bilder $I_{B\alpha}(x, y)$ mit $\alpha = 1, ..., G\text{-}1$ ist gleich dem ursprünglichen Bild ohne Verlust von Informationen weil

$$I(x, y) = \sum_{\alpha=1}^{G-1} I_{B\alpha}(x, y)$$

Dies liegt daran, dass für ein Pixel mit I(x, y) = k exakt k binäre Bilder mit $\alpha \leq k$ einen Wert von 1 an dieser Position aufweisen werden. Ein Merkmalsberechnungsverlust von Informationen bereitet jedoch insoweit keinen Grund zur Sorge, da die diskriminierenden Informationen zwischen unterschiedlichen Klassen von Texturen einbehalten werden. Daher kann auch ein reduzierter Satz von Binarisierungspegeln verwendet, der durch eine anfängliche Schwelle $\alpha_0$ und eine Stufengröße $\Delta\alpha$ parameterisiert wird. Die Serie von Schwellwertbildern wird erhalten durch

$$\alpha_i = \alpha_0 + i\Delta\alpha$$

mit i = 0, ..., $L_{Bins}$ - 1. Die anfängliche Schwelle $\alpha_0$ und die Stufengröße $\Delta\alpha$ sind für dieses Ausführungsbeispiel die oben erwähnten Randbedingungen (siehe Block 100 in Fig. 1).

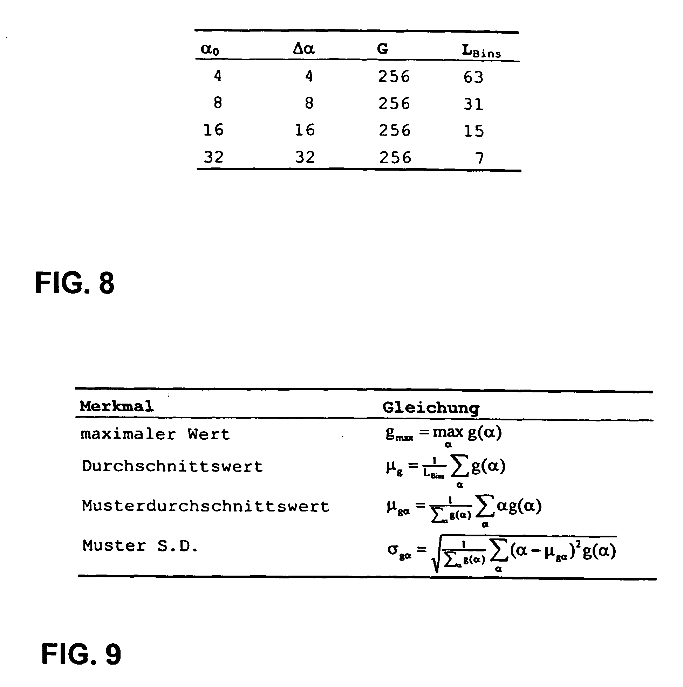

Typische Werte für diese Parameter sowie die damit erzeugbare Anzahl von Binärmasken sind in der Tabelle in Fig. 8 gezeigt. Die Anzahl von binären Bildern $L_{Bins}$, die unter Berücksichtigung des Klassifizierungsverhaltens im Gegensatz zur Laufzeitkomplexität möglichst klein sein sollte, wird bestimmt durch

$$L_{Bins} = \left\lfloor \frac{G - \alpha_0}{\Delta\alpha} \right\rfloor$$

Innerhalb eines jeden binären Bildes, werden verbundene Bereiche, die Vierer-Nachbarschaften verwenden, aus den einwertigen bzw. nullwertigen Pixeln extrahiert. Unter Verwendung dieser Bereiche wird die Anzahl von verbundenen Bereichen (NOC) der k-wertigen Pixel mit $k \in (0, 1)$ mit $NOC_k(\alpha)$ bezeichnet. Die Gesamtanzahl von k-wertigen Pixeln innerhalb eines Bereichs $R_i$ wird als $NOP_k(i, \alpha) = |R_i|$ bezeichnet. Zusätzlich wird die Unregelmäßigkeit (IRGL) von jedem Bereich $R_i$ wie folgt definiert:

$$IRGL_k(i,\alpha) = \frac{1 + \sqrt{\pi} \max_{j \in R_i} \sqrt{(x_j - \overline{x}_i)^2 + (y_j - \overline{y}_i)^2}}{\sqrt{|R_i|}} - 1$$

wobei

$$\overline{x}_i = \frac{\sum_{j \in R_i} x_j}{|R_i|}, \overline{y}_i = \frac{\sum_{j \in R_i} y_j}{|R_i|}$$

die Massenmittelpunkte des jeweiligen Bereichs sind. Nun wird für jede Schwelle $\alpha$ die gewichtete Durchschnittsunregelmäßigkeit von Bereichen innerhalb des entsprechenden binären Bildes $I_{B\alpha}(x, y)$ wie folgt berechnet:

$$\overline{IRGL_k}(\alpha) = \frac{\sum_i NOP_k(i,\alpha)IRGL_k(i,\alpha)}{\sum_i NOP_k(i,\alpha)}$$

wobei die Gewichtung durch die Anzahl von Pixeln $NOP_k(i, \alpha)$ innerhalb eines jeden Bereichs $R_i$ bestimmt wird. Aus den vier Funktionen $NOC_0(\alpha)$, $NOC_1(\alpha)$, $IRGL_0(\alpha)$ und $IRGL_1(\alpha)$ werden vier statistische Maße erhalten, die in der Tabelle in Fig. 9 wiedergegeben sind, wobei $g(\alpha)$ eine der vier Funktionen von $\alpha$ ist. Dies führt zu einer Gesamtmenge von 16 Merkmalen, die für unterschiedliche Texturen charakteristisch sind. Die Merkmale, die aus den Funktionen $NOC_0(\alpha)$ und $NOC_1(\alpha)$ abgeleitet werden, die die Anzahlen von verbundenen Bereichen pro Binarisierungspegel sind, beschreiben die Grobkörnigkeit einer Textur. Große Durchschnittswerte dieser Parameter können als eine große Anzahl von Bereichen interpretiert werden, die eine feine Struktur darstellen. Die Standardabweichung pro NOC beschreibt die Varianz für unterschiedliche Schwellen und daher, wie stark die Differenzen von benachbarten Graupegeln sind.

Ferner ermöglichen die Unregelmäßigkeitsmaße eine Charakterisierung des Texturerscheinungsbildes bezüglich kleiner kompakter Strukturen wie Kies oder langer Strukturen z. B. auf Holzschnittoberflächen.

Gemäß dem zweiten Ausführungsbeispiel der vorliegenden Erfindung werden die Nachteile des gerade beschriebenen Ansatzes zur Bestimmung der erforderlichen Merkmale für eine Klassifizierung vermieden, indem dieser Ansatz auf die Betrachtung mehrerer Ebenen erweitert wird. Ähnlich dem oben beschriebenen Inter-Ebenen-Ansatz, der für die Summenhistogramm- und Differenzhistogramm-Merkmale verwendet wird, kann eine binäre Operation zwischen den Zwischendarstellungen (Ebenen) verwendet werden, um Inter-Ebenen-Abhängigkeiten zu erfassen. Die drei grundlegenden Booleschen Operationen UND, ODER und XOR bieten sich als Lösung an.

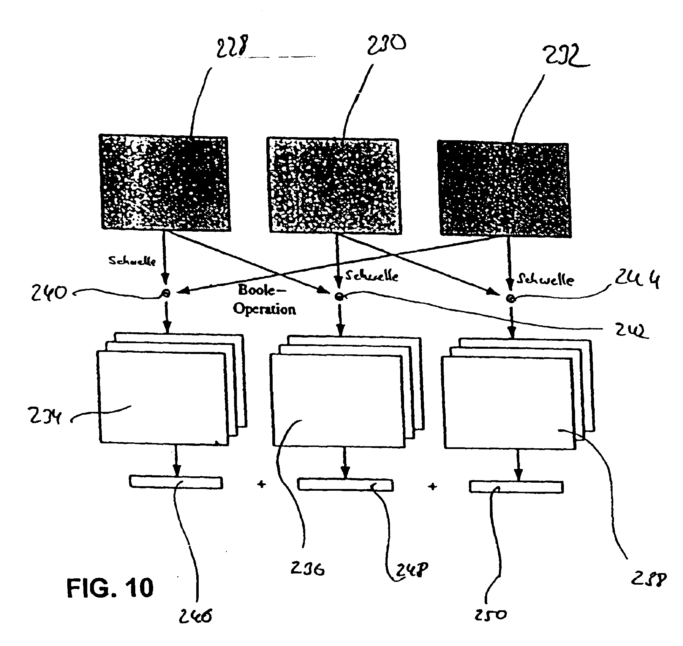

Fig. 10 zeigt, wie aus beispielsweise drei Ebenen (z.B. RGB) eines Bildes kombinierte Binärstapel erzeugt werden, um statistische geometrische Inter-Ebenen-Merkmale zu erzeugen. In Fig. 10 sind die drei Ebenen 228, 230, 232 gezeigt, die bei einer Mehrkanalaufnahme des Bildes erhalten werden. Für jede der Ebenen wird ein Binärstapel 234, 236, 238 mit einer Mehrzahl von Binärmasken erzeugt, indem die Intensitäten aus den einzelnen Ebenen durch Boolesche Operationen verknüpft werden, wie dies in Fig. 10 bei 240, 242, 244 gezeigt ist. Genauer gesagt wird nach der Schwellwertoperation eine Boolesche Operation zwischen den unterschiedlichen Ebenen 228, 230, 232 angewendet und die resultierenden Binärstapel 234, 236, 238 (Bildstapel) werden zur Merkmalsberechnung verwendet.

Für ein Farbbild I(x, y) mit Kanalindizes $p \neq q$, können binäre Inter-Ebenen-Bilder $I^{(pq)}_{B\alpha}(x, y)$ erhalten werden durch

$$I^{(pq)}_{B\alpha}(x,y) = I^{(p)}_{B\alpha}(x,y) \;\odot\; I^{(q)}_{B\alpha}(x,y)$$

$$I^{(p)}_{B\alpha}(x,y) = \begin{cases} 1 & \text{wenn } I^{(p)}(x,y) \geq \alpha \\ 0 & \text{ansonsten} \end{cases}$$

wobei $\odot$ eine der Booleschen Operationen UND , ODER und XOR und $p, q \in \{R, G, B\}$ ist. Im Bildraum mit drei Kanälen führt dies zu drei binären Stapeln oder Masken $I^{(pq)}_{B\alpha}$ für eine Merkmalsberechnung. Hieraus ergeben sich die Merkmalsvektoren 246, 248, 250, die verkettet werden, was 48 Merkmale ergibt.

Die Zwischenbilder $I^{(pq)}_{B\alpha}$ müssen nicht explizit berechnet werden. Daher werden hier für jede Boolesche Operation $\odot$ alternative Formulierungen angegeben. Eine Koordinatenindexierung (x, y) wird der Kürze halber ausgelassen. Die UND-Verknüpfung kann durch eine Minimum-Operation und einen anschließenden Vergleich implementiert werden, wenn

$$I^{(pq)}_{B\wedge\alpha} = \begin{cases} 1 & \text{wenn } \min\{I^{(p)}, I^{(q)}\} \geq \alpha \\ 0 & \text{ansonsten} \end{cases}$$

Eine ähnliche Formulierung kann unter Verwendung der Maximum-Operation für die ODER-Verknüpfung vorgesehen sein:

$$I^{(pq)}_{B\vee\alpha} = \begin{cases} 1 & \text{wenn } \max\{I^{(p)}, I^{(q)}\} \geq \alpha \\ 0 & \text{ansonsten} \end{cases}$$

Nur die XOR-Verknüpfung erfordert als Sonderfall zwei Vergleichsoperationen und wird daher wie folgt formuliert:

$$I^{(pq)}_{B\oplus\alpha} = \begin{cases} 1 & \text{wenn } (I^{(p)} - \alpha)(I^{(q)} - \alpha) \leq 0 \wedge I^{(p)} \neq I^{(q)} \\ 0 & \text{ansonsten} \end{cases}$$

Entsprechend einer Minimum-Operation produziert die UND-Verknüpfung kleinere einwertige Bereiche als die ODER-Verknüpfung, die das Maximum von zwei Kanalintensitäten verwendet. Wenn nur eine der Grundfarben (RGB) dominant oder schwach ist, resultieren daher aus der Schwellwertoperation größere homogene Bereiche. Die komplexere XOR-Verknüpfung behält jedoch Strukturen mit dominierenden Grundfarben bei, unterdrückt jedoch Bereiche mit ähnlichen oder gemischten Farbwerten.

Ähnlich wie beim ersten Ausführungsbeispiel können auch hier die Merkmale im HSV-Raum erzeugt werden. Für das SGF muss auch der einer Schwellwertoperation unterzogene HSV-Raum verwendet werden. Es wird darauf hingewiesen, dass dies zu keiner doppelten Schwellwertoperation führt, da der Farbtonkanal H bezüglich des entsprechenden Sättigungswerts S eines bestimmten Pixels einer Schwellwertoperation unterzogen wird. Zum Aufbauen des binären Stapels auf dem H'V-Raum wird jeder Kanal einzeln verarbeitet.

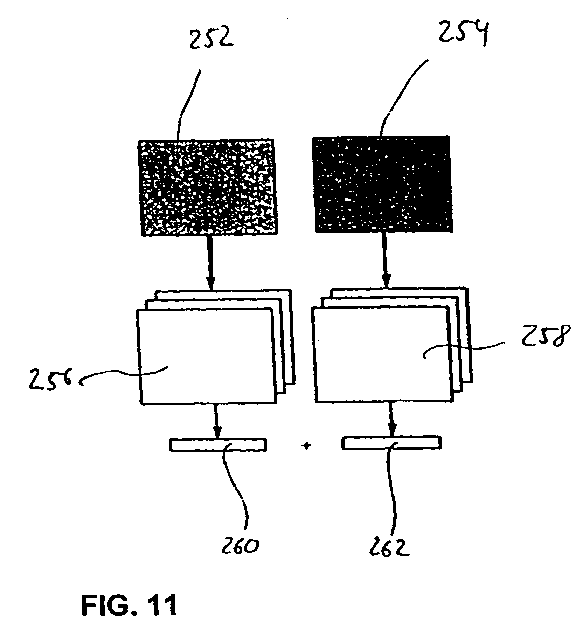

Jeder binäre Stapel wird separat behandelt und die Merkmale unabhängig berechnet, was einen Vektor von 32 Einträgen ergibt. In Fig. 11 sind die H-Ebene 252 und die V-Ebene 254 gezeigt, die durch die Aufnahme des Bildes erzeugt werden. Aus den Ebenen 252, 254 werden durch eine Schwellwertoperation die Binärstapel 256 und 258 mit einer Mehrzahl von Binärmasken gebildet. Aus den Binärstapeln 256 und 258 werden die Merkmalsvektoren 260 und 262 erzeugt.

Weil jedoch der einer Schwellwertoperation unterzogene Farbtonkanal H' eine zirkuläre Darstellung ist, könnten ähnliche Farben nach der Binarisierung in unterschiedlichen Einträgen enden. Daher wird eine trigonometrische Transformation ausgeführt, die als

$$ f = H'_0 \sin\left(\frac{H'}{2}\right) $$

definiert ist, was eine monotone Funktion bezüglich der Entfernung vom Referenzpunkt bei H = 0 ergibt. Ein Skalierungsfaktor $H'_0 = 255$ hilft dabei, ähnliche Werte wie für die Graupegel zu erreichen. Diese Maßnahme löst das Problem von ähnlichen Farben in unterschiedlichen Einträgen.

Beispiele

Vier unterschiedliche Farbbildsätze wurden unter Verwendung der erfindungsgemäßen Ansätze klassifiziert. Zwei Sätze (VisTex, BarkTex) wurden gewählt, weil sie bereits in der Bildverarbeitungsliteratur beschrieben und ausgewertet sind, die anderen beiden Sätze wurden aufgrund ihrer praktischen Relevanz bei medizinischen (Zervixzellen) und industriellen Anwendungen (Holzdefekte) ausgewählt.

Die Vision Texture-Datenbank (VisTex) des Massachusetts Institute of Technology (MIT) ist eine Sammlung von Texturbildern, die als Referenz für Bildverarbeitungsalgorithmen dienen. Die Datenbank enthält mehr als 100 einzelne Referenzbilder und natürliche Bilder mit mehreren Texturen. Die Größe des betrachteten Bereichs (ROI) betrug 64 x 64 Pixel, während die Originalbildgröße bei 24-Bit-RGB-Farben bei 512 x 512 Pixel lag.

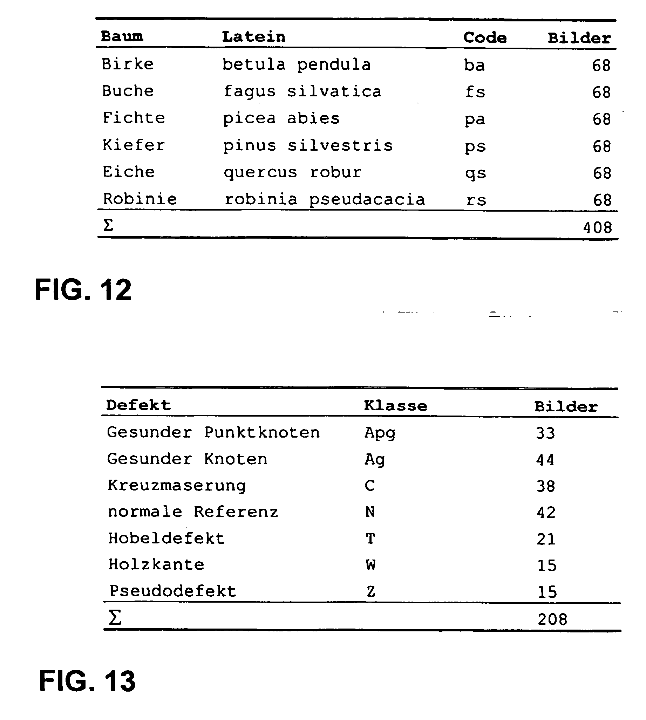

Die BarkTex-Datenbank enthält Bilder von Rinden von sechs verschiedenen Baumarten, die in der Tabelle in Fig. 12 wiedergegeben sind, in der die deutschen und lateinischen Bezeichnungen angegeben sind. Die Originalbildgröße betrug bei 24-Bit-RGB-Farben 256 x 384 Pixel. Äußerliche Einflüsse wie Moos oder Pilze, Bewässerung, Bodenbedingung und Alter des Baums führen zu einem schwierigen Klassifizierungsproblem.

Für eine zytologische Untersuchung wurden Ausschnitten von Musterbildern von Zellkernen eines Gebärmutterhalses aus zwei unterschiedlichen Mustern mit gesunden und fehlgebildeten Zellkernen verwendet. Die Größe des betrachteten Bereichs (ROI) betrug 32 x 32 Pixel, während die Originalbildgröße bei 24-Bit-RGB-Farben 1000 x 700 Pixel betrug.

Für Holzmuster wurden Bilder verwendet, deren Originalbildgröße bei 24-Bit-RGB-Farben 128 x 128 Pixel betrug. Die Texturklassen sind in der Tabelle in Fig. 13 beschrieben. Die digitale Bildanalyse kann zur Oberflächenuntersuchung von Holzblöcken in Sägewerken verwendet werden. Die Bilder von einfachen Fichtenbrettern wurden unter Verwendung einer 24-Bit-CCD-Zeilenabtast-Kamera, die über dem Förderband befestigt war, aufgenommen.

Für die Beispielsbilder wurden basierend auf den oben beschriebenen erfindungsgemäßen Ansätzen die Texturmerkmale bestimmt. Basierend auf den erzeugten Texturmerkmalen erfolgte anschließend eine Klassifikation der Bilder, wobei die Ergebnisse der Klassifikation mit den Ergebnissen verglichen wurden, die durch eine Klassifikation erreicht werden, die für die selben Bilder unter Verwendung von Merkmalen erfolgte, die gemäß herkömmlicher Grauwertansätze erzeugt wurden.

Für die Farberweiterung gemäß dem ersten Ausführungsbeispiel wurden für die Klassifikation Merkmale erzeugt, die im RGB-Raum, basierend auf dem Farbdistanzmaß und in dem HSV-Raum unter Verwendung der dort erzeugten Summen- und die Differenzhistogramme berechnet wurden.

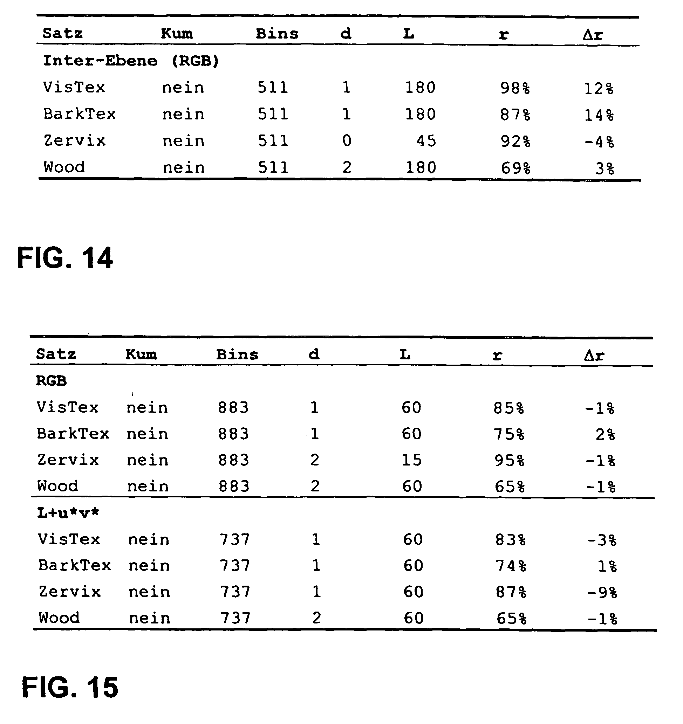

Für Multispektralbilder (Inter-Ebenen-Verfahren) wurden bei einer zusätzlichen Einstellung einer Null-Verschiebung von d = 0, wobei die Richtung θ undefiniert ist, die Inter-Ebenen-Merkmale erzeugt. Die Ergebnisse sind in der in Fig. 14 wiedergegebenen Tabelle gezeigt. Im Vergleich mit herkömmlichen Grauskala-Ansätzen zeigt sich eine Verbesserung angesichts des absoluten Verbesserungsmaßes Δr. Die einzige Ausnahme bilden die Gebärmutterhals-Zellkerne mit einer Verschlechterung der Erkennungsrate. Der Grund liegt darin, dass diese Bilder in ihrem Erscheinungsbild bei starken Kamerarauschen ziemlich grau sind. Durch die Verwendung des gewichteten Mittelwerts für eine graue Darstellung wird das Rauschen teilweise kompensiert und die Klassifizierung stabilisiert, so dass auch für diese Bilder bessere Ergebnisse als bei dem Grauwertansatz erhalten werden.

Das Farbdistanzmaß, das auf die Summen- und die Differenzhistogramme angewendet wurde, ist die L2-Norm oder Euklid-Distanz. Hier ist eine andere Histogrammlänge von 883 aufgrund der unterschiedlichen Extremwerte erforderlich. Im Gegensatz zu dem Inter-Ebenen-Verfahren erhöht sich die Anzahl von Merkmalen nicht, weil alle Ebenen gleichzeitig behandelt werden. Die Erkennungsraten sind in der Tabelle in Fig. 15 gezeigt. Im Vergleich zur entsprechenden Graupegelreferenz (siehe Verbesserung $\Delta r$) ergeben sich im wesentlichen keine Veränderungen. Ähnliche Ergebnisse werden durch Anwenden der Euklid-Distanz-Merkmale auf die L*u*v-Darstellung der Bilder erhalten. Dort wurde eine Histogrammlänge von 737 verwendet.

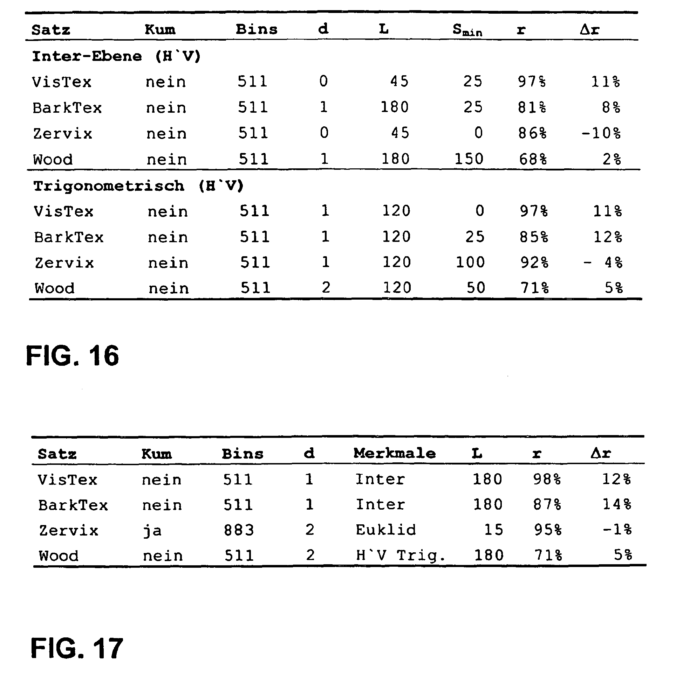

Bei der nicht-linearen Erweiterung in den HSV-Raum wird vor der Merkmalskalkulation eine Schwellwertoperation auf den Farbtonkanal H bezüglich der Sättigung S angewendet. Die Einen-Wert-auslassen-Klassifizierung (Leaving One Out) wurde auf die einer Schwellwertoperation unterzogenen Bilder mit sechs unterschiedlichen Schwellwerten $S_{min} \in \{0, 25, 50, 100, 150, 200\}$ angewendet. Die besten Ergebnisse für die Inter-Ebenen-Merkmale auf dem resultierenden H'V-Bild sind in der Tabelle in Fig. 16 im oberen Abschnitt zusammengefasst. Motiviert durch die zirkuläre Natur des Farbtons H, wurde ein trigonometrisches Distanzmaß eingeführt. Dabei werden Merkmale auf der V- und H'-Ebene separat berechnet und die Ergebnisse sind im unteren Abschnitt der Tabelle in Fig. 15 gezeigt.

Zusammenfassend ist festzuhalten, dass die Inter-Ebenen- und nicht-linearen H'V-Merkmale mit einem Schwellenwert $S_{min} = 50$ ein wesentlich besseres Verhalten als die ursprünglichen Merkmale auf den Grauskalabildern aufweisen. Die besten Ergebnisse sind in der Tabelle in Fig. 17 zusammengefasst.

Für die Farberweiterung gemäß dem zweiten Ausführungsbeispiel wurden für die Klassifikation ebenfalls Merkmale erzeugt, die im RGB-Raum, basierend auf dem Farbdistanzmaß und in dem HSV-Raum unter Verwendung der dort erzeugten Binärmasken berechnet wurden.

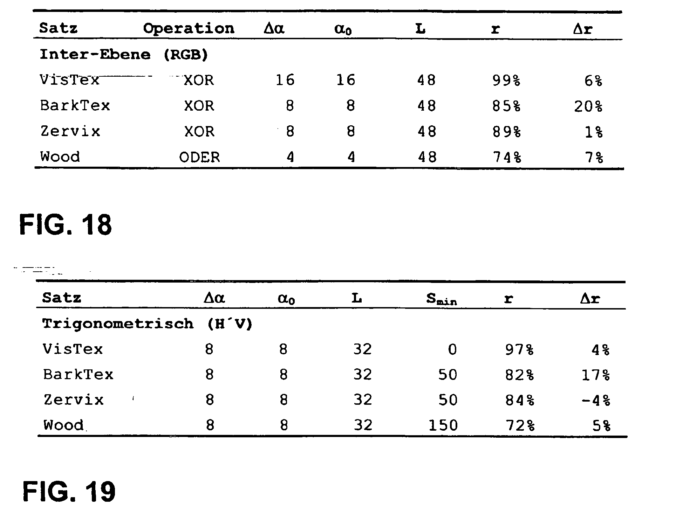

Bei der Erweiterung in die linearen Farbräume werden die Inter-Ebenen-SGF-Merkmale aus Booleschen Operationen zwischen den binären Bildstapeln von separaten Ebenen abgeleitet und auf den symmetrischen RGB-Raum angewendet. Wie aus der in Fig. 18 gezeigten Tabelle zu entnehmen ist, ergeben sich hierbei deutliche Verbesserungen gegenüber vergleichbaren Grauwertansätzen.

Bei der nicht-linearen Erweiterung in den HSV-Raum verwenden die nicht-linearen H'V-Merkmale die Farbton- und Wertebene unabhängig voneinander. H' ergibt sich aus der Schwellwertoperation des Farbtons H bezüglich der Sättigung S, die hier für sechs verschiedene Schwellwerte $S_{min} \in \{0, 25, 50, 100, 150, 200\}$ vorgenommen wird. Die Ergebnisse sind in der Tabelle in Fig. 19 wiedergegeben.

Obwohl das erfindungsgemäße Verfahren anhand von Ausführungsbeispielen beschrieben wurde, bei denen ein Farbbild oder ein farbiger Bildausschnitt als drei-kanaliges Bild verwendet wurde, ist die vorliegende Erfindung nicht hierauf beschränkt. Die Bildfolge bzw. das Bild kann durch eine n-kanalige, $n \geq 2$, Aufnahme erzeugt worden sein. Die Berechnung der numerischen Merkmale für jede der Regionen erfolgt unter Einbeziehung aller oder eines Teils der Kanäle des Bildes, wobei jeder der Kanäle anstelle der Farbdaten auch andere multispektrale Daten/Informationen beinhalten kann, wie z. B. Informationen basierend auf IR-Strahlen, UV-Strahlen, Röntgenstrahlen etc.

Somit ist aus den oben beschriebenen Ergebnissen zu erkennen, dass die Verwendung von Texturmerkmalen bei einer Klassifikation, die durch das erfindungsgemäße Verfahren erhalten wurden, aufgrund der Verknüpfung der aus den einzelnen Bildkanälen verfügbaren Informationen, durchweg bessere Klassifikationsergebnisse liefert, als sie durch herkömmliche Grauwertansätze erreicht werden.

Obwohl bei der obigen Beschreibung der bevorzugten Ausführungsbeispiele rechteckige Bildausschnitte verwendet wurden, um Texturmerkmal zu bestimmen, ist die vorliegende Erfindung nicht hierauf beschränkt. Vielmehr kann das erfindungsgemäße Verfahren auf beliebig geformte Ausschnitte angewendet werden. Die Form der Ausschnitte kann z.B. an die Form eines Objekts in dem Bild, dessen Texturmerkmale zu bestimmen sind, angepasst sein, was den Vorteil hat, dass nur die dem Objekt zugeordneten Bildpunkte verarbeitet werden müssen. Beispielsweise kann der Bildausschnitt an die Form eines zu untersuchenden Zellekerns oder Hautmelanoms angepasst sein.

In der obigen Beschreibung der bevorzugten Ausführungsbeispiele wurde die Umwandlung der RGB-Daten in den HSV-Farbraum oder in den L*u*v-Farbraum beschrieben. Anstelle dieser beschriebenen Umwandlungen, können die RGB-Daten auch in andere bekannte Farbräume übertragen werden.

**Patentansprüche**

1. Verfahren zum Extrahieren von Texturmerkmalen aus einem Bild (108), das eine Mehrzahl von Bildpunkten ($x_1/y_1$, $x_2/y_2$) umfasst, mit folgenden Schritten:

 (a) für jeden der Mehrzahl von Bildpunkten ($x_1/y_1$, $x_2/y_2$), Vergleichen der-Pixelintensität des Bildpunkts mit einem Schwellenwert, um eine Binärmaske (234, 236, 238; 252, 254)zu erzeugen, die für jeden Bildpunkt ($x_1$/$y_1$, $x_2$/$y_2$) einen ersten Binärwert, wenn die Pixelintensität den Schwellenwert übersteigt, oder einen zweiten Binärwert, wenn die Pixelintensität den Schwellenwert nicht übersteigt, aufweist;

**dadurch gekennzeichnet,**

**daß** das Bild (108) ein mehrkanaliges Bild ist und der Schritt (a) für jeden der Kanäle wiederholt wird, um für jeden der Kanäle eine Binärmaske zu erzeugen; und

**daß** das Verfahren ferner folgende Schritte aufweist:

(b) für jeden der Mehrzahl von Bildpunkten ($x_1$/$y_1$, $x_2$/$y_2$) von zumindest zwei unterschiedlichen Kanälen, logisches Verknüpfen der Binärwerte für den Bildpunkt in der dem ersten Kanal zugeordneten Binärmaske mit dem Binärwert für den Bildpunkt in der dem zweiten Kanal zugeordneten Binärmaske, um ein binäres Inter-Ebenen-Bild zu erhalten; und

(c) Bestimmen eines oder mehrerer Texturmerkmale aus dem binären Inter-Ebenen-Bild.

2. Verfahren nach Anspruch 1, bei dem der Schritt (b) wiederholt wird, bis für alle Kombinationen unterschiedlicher Kanäle (202, 204, 206; 214, 216; 228, 230, 232; 252, 254) des Bildes (108) binäre Inter-Ebenen-Bilder vorliegen.

3. Verfahren nach Anspruch 1 oder 2, bei dem die bestimmten Texturmerkmale zu einem oder mehreren Gesamttexturmerkmalen (246, 248, 250; 260, 262) des mehrkanaligen Bildes (108) zusammengefasst werden.

4. Verfahren nach Anspruch 3, bei dem das Zusammenfassen der Texturmerkmale das Erzeugen eines Texturvektors für das mehrkanalige Bild (108) umfasst, in dem die bestimmten Texturmerkmale abgelegt sind.

5. Verfahren nach einem der Ansprüche 1 bis 4, bei dem das Bild (108) durch eine mehrkanalige Aufnahme erzeugt wird, wobei die Kanäle (202, 204, 206; 214, 216; 228, 230, 232; 252, 254) des Bildes (108) unterschiedliche Farbinformationen (RGB, L*u*v*, HSV) oder andere multispektrale Informationen enthalten, wobei die anderen multispektralen Informationen auf Aufnahmen durch auf IR-Strahlen, UV-Strahlen oder Röntgenstrahlen basieren.

6. Verfahren nach Anspruch 5, bei dem, wenn die Kanäle (202, 204, 206; 214, 216; 228, 230, 232; 252, 254) des Bildes (108) Farbinformationen enthalten, den Kanälen Informationen bezüglich der Farbe (RGB) des Bildes (108), bezüglich der Luminanz und der Chrominanz (L*u*v*) des Bildes (108) oder bezüglich des Farbtons des Bildes, der Sättigung des Bildes und des Wertes (HSV) des Bildes (108) zugeordnet sind.

7. Verfahren nach einem der Ansprüche 1 bis 6, bei dem das Bild (108), aus dem die Texturmerkmale zu extrahieren sind, ein beliebig geformter Ausschnitt eines Gesamtbildes ist.

**Claims**

1. Method for extracting texture features from an image (108), comprising a plurality of pixels ($x_1$/$y_1$, $x_2$/$y_2$), comprising:

(a) for each of the plurality of pixels ($x_1$/$y_1$, $x_2$/$y_2$), comparing the pixel intensity of the pixel with a threshold to generate a binary mask (234, 236, 238; 252 254), comprising a first binary value for every pixel ($x_1$/$y_1$, $x_2$/$y_2$) when the pixel intensity exceeds the threshold, or a second binary value when the pixel intensity does not exceed the threshold;

**characterised in that**

the image (108) is a multichannel image and the step (a) is repeated for each of the channels to generate a binary mask for each of the channels; and

the method further comprises the following steps:

(b) for each of the plurality of pixels ($x_1$/$y_1$, $x_2$/$y_2$) of at least two different channels, logically combining the binary values for the pixel in the binary mask associated to the first channel with the binary value for the pixel in the binary mask associated to the second channel to obtain a binary interlevel image; and

(c) determining one or several texture features from the binary interlevel image.

2. Method of claim 1, wherein the step (b) is repeated until binary interlevel images are present for all combinations of different channels (202, 204, 206; 214, 216; 228, 230, 232; 252, 254) of the image (108).

3. Method of claim 1 or 2, wherein the determined texture features are integrated into one or several total texture features (246, 248, 250; 260, 262) of the multichannel image (108).

**4.** Method of claim 3, wherein integrating the texture features comprises generating a texture vector for the multichannel image (108), wherein the determined texture features are stored.

**5.** Method of one of claims 1 to 4, wherein the image (108) is generated by a multichannel picture, wherein the channels (202, 204, 206; 214, 216; 228, 230, 232; 252, 254) of the image (108) contain different color information (RGB, L*u*v*, HSV) or different multispectral information, wherein the other multispectral information is based on pictures by IR radiation, UV radiation or X-ray radiation.

**6.** Method of claim 5, wherein, when the channels (202, 204, 206; 214, 216; 228, 230, 232; 252, 254) of the image (108) contain color information, information with regard to the color (RGB) of the image (108), with regard to the luminance and the chrominance (L*u*v*) of the image (108) or with regard to the hue of the image, the saturation of the image and the value (HSV) of the image (108) is associated to the channels.

**7.** Method of one of claims 1 to 6, wherein the image (108) from which the texture features are to be extracted is a portion of an overall image formed in any way.

**Revendications**

**1.** Procédé d'extraction de caractéristiques de texture d'une image (108) comportant une pluralité de points d'image ($x_1/y_1$, $x_2/y_2$), aux étapes suivantes consistant à :

(a) pour chacun de la pluralité de points d'image ($x_1/y_1$, $x_2/y_2$), comparer l'intensité de pixel du point d'image à une valeur de seuil, pour générer un masque binaire (234, 236, 238 ; 252, 254) présentant, pour chaque point d'image ($x_1/y_1$, $x_2/y_2$), une première valeur binaire, lorsque l'intensité de pixel excède la valeur de seuil, ou une deuxième valeur binaire, lorsque l'intensité de pixel n'excède pas la valeur de seuil;
**caractérisé par le fait**
**que** l'image (108) est une image multicanal et que l'étape (a) est répétée pour chacun des canaux, pour générer un masque binaire pour chacun des canaux ; et
**que** le procédé présente, par ailleurs, les étapes suivantes :
(b) pour chacun de la pluralité de points d'image ($x_1/y_1$, $x_2/y_2$) d'au moins deux canaux différents, coupler de manière logique les valeurs binaires pour le point d'image dans le masque binaire associé au premier canal à la valeur binaire pour le point d'image dans le masque binaire associé au deuxième canal, pour obtenir une image entre niveaux binaire ; et
(c) déterminer une ou plusieurs caractéristiques de texture à partir de l'image entre niveaux binaire.

**2.** Procédé selon la revendication 1, dans lequel l'étape (b) est répétée jusqu'à ce que soit présentes, pour toutes les combinaisons de canaux différents (202, 204, 206 ; 214, 216 ; 228, 230, 232 ; 252, 254) de l'image (108), des images entre niveaux binaires.

**3.** Procédé selon la revendication 1 ou 2, dans lequel les caractéristiques de texture déterminées sont regroupées pour obtenir une ou plusieurs caractéristiques de texture totales (246, 248, 250 ; 260, 262) de l'image multicanal (108).

**4.** Procédé selon la revendication 3, dans lequel le regroupement des caractéristiques de texture comprend la génération d'un vecteur de texture pour l'image, multicanal (108) dans lequel sont disposées les caractéristiques de texture déterminées.

**5.** Procédé selon l'une des revendications 1 à 4, dans lequel l'image (108) est générée par une prise de vue multicanal, les canaux (202, 204, 206 ; 214, 216 ; 228, 230, 232 ; 252, 254) de l'image (108) contenant différentes informations de couleur (RGB, L*u*v*, HSV) ou d'autres informations multispectrales, les autres informations multispectrales se basant sur des prises de vue par rayons IR, rayons UV ou rayons X.

**6.** Procédé selon la revendication 5, dans lequel, lorsque les canaux (202, 204, 206 ; 214, 216 ; 228, 230, 232 ; 252, 254) de l'image (108) contiennent des informations de couleur, sont associées aux canaux des informations relatives à la couleur (RGB) de l'image (108), relatives à la luminance et la chrominance (L*u*v*) de l'image (108) ou relatives à la nuance de couleur de l'image, la saturation de l'image et la valeur (HSV) de l'image (108).

**7.** Procédé selon l'une des revendications 1 à 6, dans lequel l'image (108) de laquelle doivent être extraites les caractéristiques de texture est une découpe formée arbitrairement d'une image totale.

100

102

104

106

Lemdaten
(Klassifizierte
Stichprobe)

Farbtextur-
Algorithmen

Merkmal-Vektor
Num. Merkmale

Lern-Merkmals-
datenbank

Merkmals-Parameter

I

Unbekanntes Bild

Farbtextur-
Algorithmen

Merkmal-Vektor

Klassifikation

Klassen-
Label

114

108

110

112

116

Segmenti
ertes Bild

II

FIG. 1

**FIG. 2**

| Merkmal | Gleichung |
|---|---|
| Summendurchschnittswert | $c_0 = \mu_s = \sum_i i \hat{P}_s(i)$ |
| Summenvarianz | $c_1 = \sum_i (i - \mu_s)^2 \hat{P}_s(i)$ |
| Summenenergie | $c_2 = \sum_i \hat{P}_s^2(i)$ |
| Summenentropie | $c_3 = -\sum_i \hat{P}_s(i) \log \hat{P}_s(i)$ |
| Differenzdurchschnittswert | $c_4 = \mu_d = \sum_j j \hat{P}_D(j)$ |
| Differenzvarianz | $c_5 = \sum_j (j - \mu_d)^2 \hat{P}_D(j)$ |
| Differenzenergie | $c_6 = \sum_j \hat{P}_D^2(j)$ |
| Differenzentropie | $c_7 = -\sum_j \hat{P}_D(j) \log \hat{P}_D(j)$ |
| Clusterschatten | $c_8 = \sum_i (i - \mu_s)^3 \hat{P}_s(i)$ |
| Clusterprominenz | $c_9 = \sum_i (i - \mu_s)^4 \hat{P}_s(i)$ |
| Kontrast | $c_{10} = \sum_j j^2 \hat{P}_D(j)$ |
| Homogenität | $c_{11} = \sum_j \frac{1}{1+j^2} \hat{P}_D(j)$ |
| Korrelation | $c_{12} = c_1 - c_{10}$ |
| Zweites Winkelmoment | $c_{13} = c_2 \cdot c_6$ |
| Entropie | $c_{14} = c_3 + c_7$ |

# FIG. 3

FIG. 4

| r | g | b | L* | u* | v* |
|------|------|------|--------|---------|----------|
| 0,00 | 0,00 | 0,00 | 0,00 | – | – |
| 1,00 | 0,00 | 0,00 | 53,24 | 175,02 | 37,76 |
| 0,00 | 1,00 | 0,00 | 87,73 | -83,07 | 107,38 |
| 0,00 | 0,00 | 1,00 | 32,30 | -9,42 | -130,34 |
| 0,16 | 0,00 | 1,00 | 38,82 | 5,70 | -134,09 |
| 1,00 | 1,00 | 1,00 | 100,00 | 0,00 | 0,00 |

# FIG. 5

FIG. 6

Grau

Schwelle

224

222

220

226

**FIG. 7**

| $\alpha_0$ | $\Delta\alpha$ | G | $L_{Bins}$ |
|------|------|-----|------|
| 4 | 4 | 256 | 63 |
| 8 | 8 | 256 | 31 |
| 16 | 16 | 256 | 15 |
| 32 | 32 | 256 | 7 |

# FIG. 8

| Merkmal | Gleichung |
|---------|-----------|
| maximaler Wert | $g_{max} = \max_{\alpha} g(\alpha)$ |
| Durchschnittswert | $\mu_g = \frac{1}{L_{Bins}} \sum_{\alpha} g(\alpha)$ |
| Musterdurchschnittswert | $\mu_{g\alpha} = \frac{1}{\sum_{\alpha} g(\alpha)} \sum_{\alpha} \alpha g(\alpha)$ |
| Muster S.D. | $\sigma_{g\alpha} = \sqrt{\frac{1}{\sum_{\alpha} g(\alpha)} \sum_{\alpha} (\alpha - \mu_{g\alpha})^2 g(\alpha)}$ |

# FIG. 9

228     230     232

Schwelle    Schwelle    Schwelle

240    Boole—
       Operation

244

242

234

+     +

**FIG. 10**

236    248     288

246     250

**FIG. 11**

| Baum | Latein | Code | Bilder |
|---|---|---|---|
| Birke | betula pendula | ba | 68 |
| Buche | fagus silvatica | fs | 68 |
| Fichte | picea abies | pa | 68 |
| Kiefer | pinus silvestris | ps | 68 |
| Eiche | quercus robur | qs | 68 |
| Robinie | robinia pseudacacia | rs | 68 |
| Σ | | | 408 |

# FIG. 12

| Defekt | Klasse | Bilder |
|---|---|---|
| Gesunder Punktknoten | Apg | 33 |
| Gesunder Knoten | Ag | 44 |
| Kreuzmaserung | C | 38 |
| normale Referenz | N | 42 |
| Hobeldefekt | T | 21 |
| Holzkante | W | 15 |
| Pseudodefekt | Z | 15 |
| Σ | | 208 |

# FIG. 13

| Satz | Kum | Bins | d | L | r | Δr |
|------|-----|------|---|---|---|-----|
| Inter-Ebene (RGB) | | | | | | |
| VisTex | nein | 511 | 1 | 180 | 98% | 12% |
| BarkTex | nein | 511 | 1 | 180 | 87% | 14% |
| Zervix | nein | 511 | 0 | 45 | 92% | -4% |
| Wood | nein | 511 | 2 | 180 | 69% | 3% |

# FIG. 14

| Satz | Kum | Bins | d | L | r | Δr |
|------|-----|------|---|---|---|-----|
| RGB | | | | | | |
| VisTex | nein | 883 | 1 | 60 | 85% | -1% |
| BarkTex | nein | 883 | 1 | 60 | 75% | 2% |
| Zervix | nein | 883 | 2 | 15 | 95% | -1% |
| Wood | nein | 883 | 2 | 60 | 65% | -1% |
| L+u*v* | | | | | | |
| VisTex | nein | 737 | 1 | 60 | 83% | -3% |
| BarkTex | nein | 737 | 1 | 60 | 74% | 1% |
| Zervix | nein | 737 | 1 | 60 | 87% | -9% |
| Wood | nein | 737 | 2 | 60 | 65% | -1% |

# FIG. 15

| Satz | Kum | Bins | d | L | $S_{min}$ | r | $\Delta r$ |
|---|---|---|---|---|---|---|---|
| **Inter-Ebene (H`V)** | | | | | | | |
| VisTex | nein | 511 | 0 | 45 | 25 | 97% | 11% |
| BarkTex | nein | 511 | 1 | 180 | 25 | 81% | 8% |
| Zervix | nein | 511 | 0 | 45 | 0 | 86% | -10% |
| Wood | nein | 511 | 1 | 180 | 150 | 68% | 2% |
| **Trigonometrisch (H`V)** | | | | | | | |
| VisTex | nein | 511 | 1 | 120 | 0 | 97% | 11% |
| BarkTex | nein | 511 | 1 | 120 | 25 | 85% | 12% |
| Zervix | nein | 511 | 1 | 120 | 100 | 92% | - 4% |
| Wood | nein | 511 | 2 | 120 | 50 | 71% | 5% |

# FIG. 16

| Satz | Kum | Bins | d | Merkmale | L | r | $\Delta r$ |
|---|---|---|---|---|---|---|---|
| VisTex | nein | 511 | 1 | Inter | 180 | 98% | 12% |
| BarkTex | nein | 511 | 1 | Inter | 180 | 87% | 14% |
| Zervix | ja | 883 | 2 | Euklid | 15 | 95% | -1% |
| Wood | nein | 511 | 2 | H`V Trig. | 180 | 71% | 5% |

# FIG. 17

| Satz | Operation | $\Delta\alpha$ | $\alpha_0$ | L | r | $\Delta r$ |
|------|-----------|------|------|----|------|------|
| Inter-Ebene (RGB) | | | | | | |
| VisTex | XOR | 16 | 16 | 48 | 99% | 6% |
| BarkTex | XOR | 8 | 8 | 48 | 85% | 20% |
| Zervix | XOR | 8 | 8 | 48 | 89% | 1% |
| Wood | ODER | 4 | 4 | 48 | 74% | 7% |

# FIG. 18

| Satz | $\Delta\alpha$ | $\alpha_0$ | L | $S_{min}$ | r | $\Delta r$ |
|------|------|------|----|------|------|------|
| Trigonometrisch (H´V) | | | | | | |
| VisTex | 8 | 8 | 32 | 0 | 97% | 4% |
| BarkTex | 8 | 8 | 32 | 50 | 82% | 17% |
| Zervix | 8 | 8 | 32 | 50 | 84% | -4% |
| Wood | 8 | 8 | 32 | 150 | 72% | 5% |

# FIG. 19